(19) Europäisches Patentamt
European Patent Office
Office européen des brevets

(11) EP 2 650 959 B1

(12) **EUROPEAN PATENT SPECIFICATION**

(45) Date of publication and mention of the grant of the patent:
**15.11.2017 Bulletin 2017/46**

(21) Application number: **11847621.7**

(22) Date of filing: **07.12.2011**

(51) Int Cl.:
***H01M 4/525*** $^{(2010.01)}$ ***H01M 4/131*** $^{(2010.01)}$
***H01M 10/0525*** $^{(2010.01)}$ ***H01M 10/0569*** $^{(2010.01)}$
***H01M 2/02*** $^{(2006.01)}$ ***H01M 4/485*** $^{(2010.01)}$
***H01M 4/505*** $^{(2010.01)}$ ***H01M 4/58*** $^{(2010.01)}$
***H01M 4/587*** $^{(2010.01)}$ ***H01M 10/0567*** $^{(2010.01)}$

(86) International application number:
**PCT/JP2011/078300**

(87) International publication number:
**WO 2012/077712 (14.06.2012 Gazette 2012/24)**

(54) **LITHIUM SECONDARY BATTERY**
LITHIUM-SEKUNDÄRBATTERIE
PILE SECONDAIRE AU LITHIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.12.2010 JP 2010272523**

(43) Date of publication of application:
**16.10.2013 Bulletin 2013/42**

(73) Proprietors:
- **NEC Corporation**
  **Tokyo 108-8001 (JP)**
- **NEC Energy Devices, Inc.**
  **Chuo-ku**
  **Sagamihara-shi, Kanagawa 252-5298 (JP)**

(72) Inventors:
- **NOGUCHI, Takehiro**
  **Tokyo 108-8001 (JP)**
- **SASAKI, Hideaki**
  **Tokyo 108-8001 (JP)**
- **UEHARA, Makiko**
  **Tokyo 108-8001 (JP)**
- **WAKI, Ippei**
  **Sagamihara-shi**
  **Kanagawa 252-5298 (JP)**
- **KANEKO, Shinako**
  **Sagamihara-shi**
  **Kanagawa 252-5298 (JP)**
- **HATAKEYAMA, Hiroshi**
  **Tokyo 108-8001 (JP)**
- **SAITHO, Shinsaku**
  **Tokyo 108-8001 (JP)**
- **KATOU, Yuukou**
  **Tokyo 108-8001 (JP)**

(74) Representative: **Glawe, Delfs, Moll**
**Partnerschaft mbB**
**von Patent- und Rechtsanwälten**
**Postfach 13 03 91**
**20103 Hamburg (DE)**

(56) References cited:
**JP-A- 2002 343 427** **JP-A- 2005 078 847**
**JP-A- 2007 059 192** **JP-A- 2007 059 192**
**US-A1- 2002 076 619** **US-B1- 6 924 061**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a lithium secondary battery.

### BACKGROUND ART

Lithium secondary batteries are widely utilized for the purpose such as portable electronic devices or personal computers. Improvement of the safety of the lithium secondary battery such as flame retardancy is required, and a secondary battery using an electrolyte liquid containing a phosphate compound is proposed as described in the following documents.

Patent document 1 discloses a secondary battery using an electrolyte liquid comprising of a phosphate compound, a cyclic-type carbonate containing a halogen, a linear-type carbonate and a lithium salt. Patent document 1 shows that the safety can be improved by using this electrolyte liquid and that the irreversible capacity can be decreased by combination of a carbon negative electrode and the electrolyte liquid.

Patent Document 2 discloses that, even if lithium metal is precipitated on the negative electrode, high safety can be ensured by mixing a phosphate.

Patent Document 3 discloses a secondary battery which uses an electrolyte liquid containing a phosphate, a cyclic-type carbonate and either vinylene carbonate compound or vinyl ethylene carbonate compound.

Patent Document 4 discloses a secondary battery having an electrolyte liquid which contains a phosphate containing fluorine.

Also, although safety is required in the lithium secondary battery, the improvement of the energy density of the battery is an important technical problem.

There are some methods for improving the energy density of the lithium secondary battery, among these, it is effective to increase the operating potential of the battery. In the lithium secondary battery using a conventional lithium cobaltate or a lithium manganate as the positive electrode active substance, both operating potentials come to be 4 V class (average operating potential = 3.6 to 3.8 V: with respect to lithium potential). This is because the developed potential is defined by oxidation and reduction reaction of Co ion or Mn ion ($Co^{3+} \longleftrightarrow Co^{4+}$ or $Mn^{3+} \longleftrightarrow Mn^{4+}$).

In contrast, it is known, for example, that operating potential of 5 V class can be realized by using as the active substance a spinel compound obtained by substituting Mn of a lithium manganate to Ni or the like. Specifically, it is known that a spinel compound such as $LiNi_{0.5}Mn_{1.5}O_4$ has a potential plateau in a field of 4.5 V or higher as shown in Patent Document 5. In this spinel compound, Mn exists in a state of quaternary, and the developed potential is defined by oxidation and reduction of $Ni^{2+} \longleftrightarrow Ni^{4+}$ instead of oxidation and reduction of $Mn^{3+} \longleftrightarrow Mn^{4+}$.

The capacity of $LiNi_{0.5}Mn_{1.5}O_4$ is 130 mAh/g or more, and the average operating voltage is 4.6 V or higher with respect to metal lithium. Although the capacity is smaller than that of $LiCoO_2$, the energy density of the battery is higher than that of $LiCoO_2$. From these reasons, $LiNi_{0.5}Mn_{1.5}O_4$ is promising as a future positive electrode material.

### CITATION LIST

### PATENT DOCUMENT

Patent Document 1: JP 3961597 B
Patent Document 2: JP 3821495 B
Patent Document 3: JP 4187965 B
Patent Document 4: JP 2008-021560 A
Patent Document 5: JP 2009-123707 A

JP2007059192 , US6924061 , US20020076619 and JP2005078847 disclose a fluorine containing phosphate additive for lithium non-aqueous electrolyte.

### NON-PATENT DOCUMENTS

Non-Patent Document 1: J. Electrochem. Soc., vol. 144, 204 (1997)

## SUMMARY OF THE INVENTION

### PROBLEM TO BE SOLVED BY THE INVENTION

However, in the battery in which a positive electrode material having a high discharge potential such as $LiNi_{0.5}Mn_{1.5}O_4$ as the active substance is used, since the potential of the positive electrode comes to be further higher than that in the case of using $LiCoO_2$ or $LiMn_2O_4$, decomposition reaction of the electrolyte liquid easily occurs at a contact portion with the positive electrode. Thus, the capacity may remarkably decrease due to the charge and discharge cycle. In particular, the electrolyte liquid tends to remarkably deteriorate with increase of the temperature, and it is required to improve the operating life when operating at a high temperature such as 40°C or higher.

As the electrolyte liquid, a carbonate material is mainly used, but, in the positive electrode active substance which operates at 4.5 V or higher with respect to lithium, there is room for improving the operating life property at a high temperature as described above.

Also, the batteries disclosed in Patent Documents 1 to 4 have a 4 V class positive electrode active substance such as $LiMn_2O_4$ or $LiCoO_2$, and do not solve the particular problem in the case of using a positive electrode active substance having high discharge potential.

Thus, an object of an exemplary embodiment of the invention is to provide a lithium secondary battery which has high energy density by containing a positive electrode active substance operating at a potential of 4.5 V or higher with respect to lithium and which has excellent cycle property.

### MEANS OF SOLVING THE PROBLEM

An exemplary embodiment of the invention is a lithium secondary battery, which comprises a positive electrode comprising a positive electrode active substance and an electrolyte liquid comprising a nonaqueous electrolyte solvent; wherein the positive electrode active substance operates at a potential of 4.5 V or higher with respect to lithium; and wherein the nonaqueous electrolyte solvent comprises a fluorine-containing phosphate represented by following formula (1):

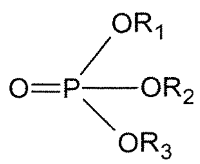

(1),

wherein, in formula (1), $R_1$, $R_2$ and $R_3$ are each independently a substituted or non-substituted alkyl group, and at least one of $R_1$, $R_2$ and $R_3$ is a fluorine-containing alkyl group.

### EFFECT OF THE INVENTION

The constitution of an exemplary embodiment of the invention can provide a secondary battery having excellent cycle property even if a positive electrode active substance operating at a potential of 4.5 V or higher with respect to lithium is used. Thus, a lithium secondary battery having high energy density and an excellent cycle property can be provided.

## BRIEF DESCRIPTION OF DRAWINGS

FIG. 1 is a view showing a cross-sectional conformation of a secondary battery according to an exemplary embodiment of the invention.

## MODE FOR CARRYING OUT THE INVENTION

A lithium secondary battery of an exemplary embodiment of the invention has a positive electrode containing a positive electrode active substance and an electrolyte liquid containing a nonaqueous electrolyte solvent. The positive electrode active substance operates at a potential of 4.5 V or higher with respect to lithium. The nonaqueous electrolyte solvent contains a phosphate represented by above-mentioned formula (1) (hereinafter, also referred to as fluorine-containing phosphate). In the case where the positive electrode active substance operating at a potential of 4.5 V or higher with respect to lithium is used, the capacity retention ratio can be improved by using the nonaqueous electrolyte

solvent including a fluorine-containing phosphate.

(Electrolyte liquid)

The electrolyte liquid contains a supporting salt and a nonaqueous electrolyte solvent, and the nonaqueous electrolyte solvent contain a fluorine-containing phosphate represented by above-mentioned formula (1).

The content of the fluorine-containing phosphate contained in the nonaqueous electrolyte solvent is preferably, but should not be limited to, 10 vol% or more and 95 vol% or less in the nonaqueous electrolyte solvent. When the content of the fluorine-containing phosphate in the nonaqueous electrolyte solvent is 10 vol% or more, the effect of increasing the voltage resistance is improved more. Also, when the content of the fluorine-containing phosphate in the nonaqueous electrolyte solvent is 95 vol% or less, the ion conductivity of the electrolyte liquid is improved and the charge and discharge rate of the battery becomes better. Also, the content of the fluorine-containing phosphate in the nonaqueous electrolyte solvent is more preferably 20 vol% or more, is further preferably 31 vol% or more, and is particularly preferably 35 vol% or more. Also, the content of the fluorine-containing phosphate in the nonaqueous electrolyte solvent is more preferably 70 vol% or less, is further preferably 60 vol% less, is particularly preferably 59 vol% or less, and is more particularly preferably 55 vol% or less.

In the fluorine-containing phosphate represented by formula (1), $R_1$, $R_2$ and $R_3$ are each independently a substituted or non-substituted alkyl group, and at least one of $R_1$, $R_2$ and $R_3$ is a fluorine-containing alkyl group. The fluorine-containing alkyl group is an alkyl group having at least one fluorine atom. The carbon numbers of alkyl group $R_1$, $R_2$ and $R_3$ are preferably 1 or more and 4 or less and are more preferably 1 or more and 3 or less, each independently. When the carbon number of the alkyl group is 4 or less, the increase of the viscosity of the electrolyte liquid is suppressed and the electrolyte liquid is easy to be penetrated into the pore in the electrode and the separator, and the ion conductivity is improved and the current value becomes good in the charge and discharge property of the battery.

Also, in formula (1), it is preferable that all $R_1$, $R_2$ and $R_3$ be a fluorine-containing alkyl group.

Also, at least one of $R_1$, $R_2$ and $R_3$ is preferably a fluorine-containing alkyl group in which 50 % or more of hydrogen atoms of a corresponding non-substituted alkyl group are substituted by a fluorine atom. Also, it is more preferable that all $R_1$, $R_2$ and $R_3$ are a fluorine-containing alkyl group and that the $R_1$, $R_2$ and $R_3$ are a fluorine-containing alkyl group in which 50 % or more of hydrogen atoms of a corresponding non-substituted alkyl group are substituted by a fluorine atom. If the content of the fluorine atom is large, the voltage resistance is improved more, and in the case of using a positive electrode active substance operating at a potential of 4.5 V or higher with respect to lithium, deterioration of the battery capacity after the cycle can be further reduced. Also, the ratio of fluorine atom in the substituent groups including hydrogen atom in the fluorine-containing alkyl group is preferably 55% or more.

Also, $R_1$ to $R_3$ may have a substituent group other than fluorine atom, and examples of the substituent group include at least one selected from the group consisting of among amino group, carboxy group, hydroxy group, cyano group and halogen atoms (for example, chlorine atom and bromine atom). Note that, the above-mentioned carbon number includes the substituent group in concept.

Examples of the fluorine-containing phosphate include, for example, tris(trifluoromethyl) phosphate, tris(trifluoroethyl) phosphate, tris(tetrafluoropropyl) phosphate, tris(pentafluoropropyl) phosphate, tris(heptafluorobutyl) phosphate and tris(octafluoropentyl) phosphate. Also, examples of the fluorine-containing phosphate include, for example, Trifluoroethyl dimethyl phosphate, bis(trifluoroethyl) methyl phosphate, bistrifluoroethyl ethyl phosphate, pentafluoropropyl dimethyl phosphate, heptafluorobutyl dimethyl phosphate, trifluoroethyl methyl ethyl phosphate, pentafluoropropyl methyl ethyl phosphate, heptafluorobutyl methyl ethyl phosphate, trifluoroethyl methyl propyl phosphate, pentafluoropropyl methyl propyl phosphate, heptafluorobutyl methyl propyl phosphate, trifluoroethyl methyl butyl phosphate, pentafluoropropyl methyl butyl phosphate, heptafluorobutyl methyl butyl phosphate, trifluoroethyl diethyl phosphate, pentafluoropropyl diethyl phosphate, heptafluorobutyl diethyl phosphate, trifluoroethyl ethyl propyl phosphate, pentafluoropropyl ethyl propyl phosphate, heptafluorobutyl ethyl propyl phosphate, trifluoroethyl ethyl butyl phosphate, pentafluoropropyl ethyl butyl phosphate, heptafluorobutyl ethyl butyl phosphate, trifluoroethyl dipropyl phosphate, pentafluoropropyl dipropyl phosphate, heptafluorobutyl dipropyl phosphate, trifluoroethyl propyl butyl phosphate, pentafluoropropyl propyl butyl phosphate, heptafluorobutyl propyl butyl phosphate, trifluoroethyl dibutyl phosphate, pentafluoropropyl dibutyl phosphate and heptafluorobutyl dibutyl phosphate. Examples of the tris(tetrafluoropropyl) phosphate include, for example, tris(2,2,3,3-tetrafluoro propyl) phosphate. Examples of the tris(pentafluoropropyl) phosphate include, for example, tris(2,2,3,3,3-pentafluoropropyl) phosphate. Examples of the tris(trifluoroethyl) phosphate include, for example, tris(2,2,2-trifluoroethyl) phosphate (hereinafter, also abbreviated to PTTFE). Examples of the tris(heptafluorobutyl) phosphate include, for example, tris(1H, 1H-heptafluorobutyl) phosphate. Examples of the tris(octafluoropentyl) phosphate include, for example, tris((1H,1H,5H-octafluoropentyl) phosphate. Among these, since the effect of suppressing the decomposition of the electrolyte liquid at a high potential is high, tris(2,2,2-trifluoroethyl) phosphate represented by following formula (2) is preferable. The fluorine-containing phosphate can be used alone, or in combination with two or more kinds.

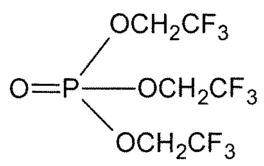

(2)

It is preferable that the nonaqueous electrolyte solvent further contain a cyclic-type carbonate or a linear-type carbonate together with a fluorine-containing phosphate.

Since the cyclic-type carbonate or the linear-type carbonate has relatively large dielectric constant, by adding this results, the dissociation property of the supporting salt is improved and it becomes easy to give a sufficient electroconductivity. Further, since the viscosity of the electrolyte liquid is decreased by adding this, there is an advantage that the ion mobility in the electrolyte liquid is improved. Also, since the cyclic-type carbonate and the linear-type carbonate have high voltage resistance and a high electroconductivity, it is suitable for the mixing with a fluorine-containing phosphate.

Examples of the cyclic-type carbonate includes, for example, but should not be limited to, ethylene carbonate (EC), propylene carbonate (PC) butylene carbonate (BC) or vinylene carbonate (VC). Also, the cyclic-type carbonate includes fluorinated cyclic-type carbonates. Examples of the fluorinated cyclic-type carbonate include, for example, compounds which are obtained by substituting a part or all of hydrogen atoms of ethylene carbonate (EC), propylene carbonate (PC), butylene carbonate (BC), vinylene carbonate (VC) or the like to fluorine atom. More specifically, for example, 4-fluoro-1,3-dioxolane-2-one, (cis- or trans-) 4,5-difluoro-1,3-dioxolane-2-one, 4,4-difluoro-1,3-dioxolane-2-one and 4-fluoro-5-methyl-1,3-dioxolane-2-one can be used as the fluorinated cyclic-type carbonate. Among the above-listed compounds, the cyclic-type carbonate is preferably ethylene carbonate, propylene carbonate or a compound which is obtained by fluorinating a part thereof from the viewpoint of the voltage resistance and the electroconductivity, and is more preferably ethylene carbonate. The cyclic-type carbonate can be used alone, or in combination with two or more kinds.

The content of the cyclic-type carbonate in the nonaqueous electrolyte solvent is preferably 0.1 vol% or more from the viewpoint of the effect of increasing the dissociation of the supporting salt and the effect of increasing the electroconductivity of the electrolyte liquid, is more preferably 5 vol% or more, is further preferably 10 vol% or more, and is particularly preferably 15 vol% or more. Also, the content of the cyclic-type carbonate in the nonaqueous electrolyte solvent is preferably 70 vol% or less from the similar view point, is more preferably 50 vol% or less, and is further preferably 40 vol% or less.

Examples of the linear-type carbonate include, for example, but should not be limited to, dimethyl carbonate (DMC), ethyl methyl carbonate (EMC), diethyl carbonate (DEC) and dipropyl carbonate (DPC). Also, the linear-type carbonate includes fluorinated linear-type carbonates. Examples of the fluorinated linear-type carbonate include, for example, compounds which are obtained by substituting a part or all of hydrogen atoms of ethyl methyl carbonate (EMC), dimethyl carbonate (DMC), diethyl carbonate (DEC), dipropyl carbonate (DPC) or the like to fluorine atom. More specific examples of the fluorinated linear-type carbonate include, for example, bis(fluoroethyl) carbonate, 3-fluoropropyl methyl carbonate, 3,3,3-trifluoropropyl methyl carbonate, 2,2,2-trifluoroethyl methyl carbonate, 2,2,2-trifluoroethyl ethyl carbonate, monofluoromethyl methyl carbonate, methyl-2,2,3,3-tetrafluoropropyl carbonate, ethyl-2,2,3,3-tetrafluoropropyl carbonate, bis(2,2,3,3-tetrafluoropropyl) carbonate, bis(2,2,2-trifluoroethyl) carbonate, 1-monofluoroethyl ethyl carbonate, 1-monofluoroethyl methyl carbonate, 2-monofluoroethyl methyl carbonate, bis(1-monofluoroethyl) carbonate, bis(2-monofluoroethyl) carbonate and bis(monofluoromethyl) carbonate. Among these, dimethyl carbonate, 2,2,2-trifluoroethyl methyl carbonate, monofluoromethyl methyl carbonate, methyl-2,2,3,3-tetrafluoropropyl carbonate are preferable from the viewpoint of the voltage resistance and the electroconductivity. The linear-type carbonate can be used alone, or in combination with two or more kinds.

In the linear-type carbonate, in the case where the carbon number of the substituent group added to "-OCOO-" structure is small, there is an advantage that the viscosity is low. On the other hand, if the carbon number is too big, the viscosity of the electrolyte liquid may become high, and the electroconductivity of Li ion may be decreased. From these reasons, the total carbon number of the two substituent groups added to "-OCOO-" structure of the linear-type carbonate is preferably 2 or more and 6 or less. Also, in the case where the substituent group added to "-OCOO-" structure contains a fluorine atom, the oxidation resistance of the electrolyte liquid is improved. From these reasons, the linear-type carbonate is preferably a fluorinated linear-type carbonate represented by following formula (3):

$$CnH_{2n+1-l}F_l\text{-OCOO-}C_mH_{2m+1-k}F_k \qquad (3),$$

wherein, in formula (3), n is 1, 2 or 3, m is 1, 2 or 3, l is any one integer from 0 to 2n+1, k is any one integer from 0 to 2m+1, and at least one of l and k is an integer of 1 or more.

In the fluorinated linear-type carbonate represented by formula (3), when the substituted ratio by fluorine is small, the capacity retention ratio of the battery may be decreased and generation of the gas may occur due to the reaction of the fluorinated linear-type carbonate with the positive electrode with high voltage. On the other hand, when the substituted ratio by fluorine is too large, compatibility of the linear-type carbonate with another solvent may be decreased and the boiling point of the linear-type carbonate may be decreased. From these reasons, the substituted ratio by fluorine is preferably 1 % or more and 90% or less, is more preferably 5% or more and 85% or less, and is further preferably 10% or more 80% or less. In other words, 1, m and n in formula (3) preferably satisfy the following equation:

$$0.01 \leq (l+k) / (2n+2m+2) \leq 0.9.$$

The linear-type carbonate has effects of decreasing the viscosity of the electrolyte liquid and therefore can increase the electroconductivity of the electrolyte liquid. From the viewpoint of these, the content of the linear-type carbonate in the nonaqueous electrolyte solvent is preferably 5 vol% or more, is more preferably 10 vol% or more, and is further preferably 15 vol% or more. Also, the content of the linear-type carbonate in the nonaqueous electrolyte solvent is preferably 90 vol% or less, is more preferably 80 vol% or less, and further preferably 70 vol% or less.

Also, the content of the fluorinated linear-type carbonate is preferably, but should not be limited to, 0.1 vol% or more and 70 vol% or less in the nonaqueous electrolyte solvent. When the content of the fluorinated linear-type carbonate in the nonaqueous electrolyte solvent is 0.1 vol% or more, the viscosity of the electrolyte liquid can be decreased and the electroconductivity can be increased. Also, the effect of increasing oxidation resistance is obtained. Also, when the content of the fluorinated linear-type carbonate in the nonaqueous electrolyte solvent is 70 vol% or less, the electroconductivity of the electrolyte liquid can be kept high. Also, the content of the fluorinated linear-type carbonate in the nonaqueous electrolyte solvent is more preferably 1 vol% or more, is further preferably 5 vol% or more, and is particularly preferably 10 vol% or more. Also, the content of the fluorinated linear-type carbonate in the nonaqueous electrolyte solvent is more preferably 65 vol% or less, is further preferably 60 vol% or less, and is particularly preferably 55 vol% or less.

The nonaqueous electrolyte solvent can contain a carboxylate together with the fluorine-containing phosphate.

Examples of the carboxylate include, for example, but should not be limited to, ethyl acetate, methyl propionate, ethyl formate, ethyl propionate, methyl butyrate, ethyl butyrate, methyl acetate and methyl formate. Also, the carboxylate includes fluorinated carboxylates. Examples of the fluorinated carboxylate include, for example, compounds which are obtained by substituting a part or all of hydrogen atoms of ethyl acetate, methyl propionate, ethyl formate, ethyl propionate, methyl butyrate, ethyl butyrate, methyl acetate or the methyl formate to fluorine atom. Also, specific examples of the fluorinated carboxylate include, for example, pentafluoroethyl propionate, ethyl 3,3,3-trifluoropropionate, methyl 2,2,3,3-tetrafluoropropionate, 2,2-difluoroethyl acetate, methyl heptafluoroisobutyrate, methyl 2,3,3,3-tetrafluoropropionate, methyl pentafluoropropionate, methyl 2-(trifluoromethyl)-3,3,3-trifluoropropionate, ethyl heptafluorobutyrate, methyl 3,3,3-trifluoropropionate, 2,2,2-trifluoroethyl acetate, isopropyl trifluoroacetate, tert-butyl trifluoroacetate, ethyl 4,4,4-trifluorobutyrate, methyl 4,4,4-trifluorobutyrate, butyl 2,2-difluoroacetate, ethyl difluoroacetate, n-butyl trifluoroacetate, 2,2,3,3-tetrafluoropropyl acetate, ethyl 3-(trifluoromethyl)butyrate, methyl tetrafluoro-2-(methoxy)propionate, 3,3,3-trifluoropropyl 3,3,3-trifluoropropionate, methyl difluoroacetate, 2,2,3,3-tetrafluoropropyl trifluoroacetate, 1H,1H-heptafluorobutyl acetate, methyl heptafluorobutyrate and ethyl trifluoroacetate. Among these, ethyl propionate, methyl acetate, methyl 2,2,3,3-tetrafluoropropionate and 2,2,3,3-tetrafluoropropyl trifluoroacetate are preferable as the carboxylate from the viewpoint of the voltage resistance and the boiling point. The carboxylate has an effect of decreasing the viscosity of the electrolyte liquid like the linear-type carbonate. Thus, for example, the carboxylate can be used instead of the linear-type carbonate, and can also be used together with the linear-type carbonate.

The linear-type carboxylate has a low viscosity when the carbon number of the substituent group added to "-COO-" structure is small, but the boiling point tends to be also decreased. The linear-type carboxylate whose boiling point is low may be vaporized at the time of operation of the battery at a high temperature. On the other hand, when the carbon number is too large, the viscosity of the electrolyte liquid may become higher and the electroconductivity may be decreased. From these reasons, the total carbon number of two substituent groups added to "-COO-" structure of the linear-type carboxylate is preferably 3 or more and 8 or less. Also, if the substituent group added to "-COO-" structure contains a fluorine atom, oxidation resistance of the electrolyte liquid can be improved. From these reasons, the linear-type carboxylate is preferably a fluorinated linear-type carboxylate represented by following formula (4):

$$C_nH_{2n+1-l}F_l\text{-COO-}C_mH_{2m+1-k}F_k \qquad (4),$$

Wherein, in formula (4), n is 1, 2, 3 or 4, m is 1, 2, 3 or 4, l is any one integer from 0 to 2n+1, k is any one integer from 0 to 2m+1, and at least one of l and k is an integer of 1 or more.

In the fluorinated linear-type carboxylate represented by formula (4), when the substituted ratio by fluorine is small, the capacity retention ratio of the battery may be decreased and generation of the gas may occur due to the reaction of the fluorinated linear-type carboxylate with the positive electrode with high voltage. On the other hand, when the substituted ratio by fluorine is too large, compatibility of the fluorinated linear-type carboxylate with another solvent may be decreased and the boiling point of the linear-type carboxylate may be decreased. From these reasons, the substituted ratio by fluorine is preferably 1% or more and 90% or less, is more preferably 10% or more and 85% or less, and is further preferably 20% or more 80% or less. In other words, 1, m and n in formula (4) preferably satisfy the following equation:

$$0.01 \leq (l+k) / (2n+2m+2) \leq 0.9$$

The content of the carboxylate in the nonaqueous electrolyte solvent is preferably 0.1 vol% or more, is more preferably 0.2 vol% or more, is further preferably 0.5 vol% , and is particularly preferably 1 vol% or more. The content of the carboxylate in the nonaqueous electrolyte solvent is preferably 50 vol% or less, is more preferably 20 vol% or less, is further preferably 15 vol% or less, and is particularly preferably 10 vol% or less. When the content of the carboxylate is 0.1 vol% or more, low-temperature characteristic can be improved more and the electroconductivity can be also improved more. Also, when the content of the carboxylate is 50 vol% or less, moisture pressure can be prevented from becoming too high in the case where the battery was left at a high temperature.

Also, the content of the fluorinated linear-type carboxylate is preferably, but should not be limited to, 0.1 vol% more and 50 vol% or less in the nonaqueous electrolyte solvent. When the content of the fluorinated linear-type carboxylate in the nonaqueous electrolyte solvent is 0.1 vol% or more, the viscosity of the electrolyte liquid can be decreased and the electroconductivity can be increased. Also, the effect of increasing oxidation resistance is obtained. Also, when the content of the fluorinated linear-type carboxylate in the nonaqueous electrolyte solvent is 50 vol% or less, the electroconductivity of the electrolyte liquid can be kept high, and compatibility of the electrolyte liquid can be ensured. Also, the content of the fluorinated linear-type carboxylate in the nonaqueous electrolyte solvent is more preferably 1 vol% or more, is further preferably 5 vol% or more, and is particularly preferably 10 vol% or more. Also, the content of the fluorinated linear-type carboxylate in the nonaqueous electrolyte solvent is more preferably 45 vol% or less, is further preferably 40 vol% or less, and is particularly preferably 35 vol% or less.

The nonaqueous electrolyte solvent can contain an alkylene biscarbonate represented by following formula (5) together with the fluorine-containing phosphate. Since the oxidation resistance of the alkylene biscarbonate is equal to or higher than that of the linear-type carbonate, the voltage resistance of the electrolyte liquid can be improved.

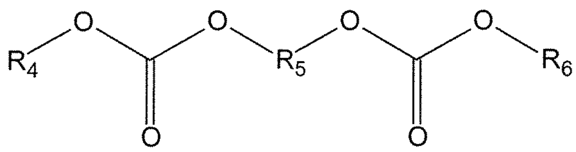
(5)

wherein $R_4$ and $R_6$ each independently represent a substituted or non-substituted alkyl group, and $R_5$ represents a substituted or non-substituted alkylene group.

In formula (5), the alkyl group includes linear-type groups or branched-type groups. The carbon number is preferably 1 to 6 and the carbon number is more preferably 1 to 4. The alkylene group is a bivalent saturated hydrocarbon group, and includes linear-type groups or branched-type groups. The carbon number is preferably 1 to 4, and the carbon number is more preferably 1 to 3.

Examples of the alkylene biscarbonate represented by formula (5) include, for example, 1,2-bis(methoxycarbonyloxy) ethane, 1,2-bis(ethoxycarbonyloxy) ethane, 1,2-bis(methoxycarbonyloxy) propane or 1-ethoxycarbonyloxy-2-methoxycarbonyloxy ethane. Among these, 1,2-bis(methoxycarbonyloxy) ethane is preferable.

The content of the alkylene biscarbonate in the nonaqueous electrolyte solvent is preferably 0.1 vol% or more, is more preferably 0.5 vol% or more, is further preferably 1 vol% or more, and is particularly preferably 1.5 vol% or more. The content of the alkylene biscarbonate in the nonaqueous electrolyte solvent is preferably 70 vol% or less, is more preferably 60 vol% or less, is further preferably 50 vol% or less, and is particularly preferably 40 vol% or less.

The alkylene biscarbonate is a material having a low dielectric constant. Therefore, for example, it can be used instead of the linear-type carbonate, or it can be used together with the linear-type carbonate.

The nonaqueous electrolyte solvent can contain a linear-type ether together with the fluorine-containing phosphate.

Examples of the linear-type ether include, for example, but should not be limited to, 1,2-ethoxyethane (DEE) or ethoxy methoxy ethane (EME). Also, the linear-type ether includes fluorinated linear-type ethers. The fluorinated linear-type ether has high oxidation resistance, and is preferable in the case of the positive electrode operating at a high potential. Examples of the fluorinated linear-type ether include, for example, compounds which are obtained by substituting a part or all of hydrogen atoms of 1,2-ethoxyethane (DEE) or ethoxy methoxy ethane (EME) to fluorine atom. Also, examples of the fluorinated linear-type ether include, for example, 2,2,3,3,3-pentafluoropropyl 1,1,2,2-tetrafluoroethyl ether, 1,1,2,2-tetrafluoroethyl 2,2,2-trifluoroethyl ether, 1H,1H,2'H,3H-decafluorodipropyl ether, 1,1,1,2,3,3-hexafluoropropyl-2,2-difluoroethyl ether, isopropyl 1,1,2,2-tetrafluoroethyl ether, propyl 1,1,2,2-tetrafluoroethyl ether, 1,1,2,2-tetrafluoroethyl 2,2,3,3-tetrafluoropropyl ether, 1H,1H,5H-perfluoropentyl-1,1,2,2-tetrafluoroethyl ether, 1H,1H,2'H-perfluorodipropyl ether, 1H-perfluorobutyl-1H-perfluoroethyl ether, methyl perfluoropentyl ether, methyl perfluorohexyl ether, methyl 1,1,3,3,3-pentafluoro-2-(trifluoromethyl)propyl ether, 1,1,2,3,3,3-hexafluoropropyl 2,2,2-trifluoroethyl ether, ethyl nonafluorobutyl ether, ethyl 1,1,2,3,3,3-hexafluoropropyl ether, 1H,1H,5H-octa fluoropentyl 1,1,2,2-tetrafluoroethyl ether, 1H,1H,2'H-perfluorodipropyl ether, heptafluoropropyl 1,2,2,2-tetrafluoroethyl ether, 1,1,2,2-tetrafluoroethyl-2,2,3,3-tetrafluoropropyl ether, 2,2,3,3,3-pentafluoropropyl-1,1,2,2-tetrafluoroethyl ether, ethyl nonafluorobutyl ether and methyl nonafluorobutyl ether. Among these, 1,1,2,2-tetrafluoroethyl-2,2,3,3-tetrafluoropropyl ether, 1H,1H,2'H,3H-decafluorodipropyl ether, 1H,1H,2'H-perfluorodipropyl ether and ethyl nonafluorobutyl ether are preferable from the viewpoint of the voltage resistance and the boiling point. The linear-type ether has an effect of decreasing the viscosity of the electrolyte liquid like the linear-type carbonate. Thus, for example, the linear-type ether can be used instead of the linear-type carbonate or the carboxylate, and can also be used together with the linear-type carbonate or the carboxylate.

When the carbon number of the linear-type ether is small, the boiling point tends to be decreased, and therefore it may be vaporized at the time of operation of the battery at a high temperature. On the other hand, when the carbon number is too large, the viscosity of the linear-type ether may become higher, and electroconductivity of the electrolyte liquid may be decreased. Thus, the carbon number is preferably 4 or more and 10 or less. From these reasons, the linear-type ether is a fluorinated linear-type ether represented by following formula (6):

$$C_nH_{2n+1-l}F_l\text{-}O\text{-}C_mH_{2m+1-k}F_k \qquad (6)$$

wherein, in formula (6), n is 1, 2, 3, 4, 5 or 6, m is 1, 2, 3 or 4,1 is any one integer from 0 to 2n+1, k is any one integer from 0 to 2m+1, and at least one of l and k is an integer of 1 or more.

In the fluorinated linear-type ether represented by formula (6), when the substituted ratio by fluorine is small, the capacity retention ratio of the battery may be decreased and generation of the gas may occur due to the reaction of the fluorinated linear-type ether with the positive electrode with high voltage. On the other hand, when the substituted ratio by fluorine is too large, compatibility of the fluorinated linear-type ether with another solvent may be decreased and the boiling point of the fluorinated linear-type ether may be decreased. From these reasons, the substituted ratio by fluorine is preferably 10% or more and 90% or less, is more preferably 20% or more and 85% or less, and is further preferably 30% or more 80% or less. In other words, 1, m and n in formula (6) preferably satisfy the following equation:

$$0.1 \leq (l+k) / (2n+2m+2) \leq 0.9.$$

Also, the content of the fluorinated linear-type ether is preferably, but should not be limited to, 0.1 vol% or more and 70 vol% or less in the nonaqueous electrolyte solvent. When the content of the fluorinated linear-type ether in the nonaqueous electrolyte solvent is 0.1 vol% or more, the viscosity of the electrolyte liquid can be decreased and the electroconductivity can be increased. Also, the effect of increasing oxidation resistance is obtained. Also, when the content of the fluorinated linear-type ether in the nonaqueous electrolyte solvent is 70 vol% or less, the electroconductivity of the electrolyte liquid can be kept high, and compatibility of the electrolyte liquid can also be ensured.. Also, the content of the fluorinated linear-type ether in the nonaqueous electrolyte solvent is more preferably 1 vol% or more, is further preferably 5 vol% or more, and is particularly preferably 10 vol% or more. Also, the content of the fluorinated linear-type ether in the nonaqueous electrolyte solvent is more preferably 65 vol% or less, is further preferably 60 vol% or less, and is particularly preferably 55 vol% or less.

The nonaqueous electrolyte solvent may contain a following compound together with the above-mentioned compound. For example, the nonaqueous electrolyte solvent is a γ-lactone such as γ-butyrolactone, a linear-type ether such as 1,2-ethoxyethane (DEE) or ethoxy methoxy ethane (EME), a cyclic-type ether such as tetrahydrofuran or 2-methyltetrahydrofuran, or the like. Also, a compound which is obtained by substituting a part hydrogen atoms of this compound to fluorine atom can be contained. Also, in addition, an aprotic organic solvent such as dimethylsulfoxide, 1,3-dioxolane, formamide, acetamide, dimethylformamide, dioxolane, acetonitrile, propylnitrile, nitromethane, ethyl monoglyme, trimethoxymethane, a dioxolane derivative, sulfolane, methyl sulfolane, 1,3-dimethyl-2-imidazolidinone, 3-methyl-2-oxazolidinone, a propylene carbonate derivative, a tetrahydrofuran derivative, ethyl ether, 1,3-propane sultone, anisole or N-methylpyrrolidone may be contained.

Example of the supporting salt include, for example, lithium salts such as $LiPF_6$, $LiAsF_6$, $LiAlCl_4$, $LiClO_4$, $LiBF_4$, $LiSbF_6$, $LiCF_3SO_3$, $LiC_4F_9CO_3$, $LiC(CF_3SO_2)_2$, $LiN(CF_3SO_2)_2$, $LiN(C_2F_5SO_2)_2$ and $LiB_{10}Cl_{10}$. Also, additional examples of the supporting salt include lithium salts of lower aliphatic carboxylic acids, chloroborane lithium, lithium tetraphenylborate, LiBr, LiI, LiSCN and LiCl. The supporting salt can be used alone, or in combination with two or more kinds.

Also, an ion conductive polymer can be added to the nonaqueous electrolyte solvent. Examples of the ion conductive polymer include, for example, polyethers such as polyethylene oxides and polypropylene oxides, and polyolefins such as polyethylenes and polypropylenes. Also, examples of the ion conductive polymer include, for example, polyvinylidene fluorides, polytetrafluoroethylenes, polyvinyl fluorides, polyvinyl chlorides, polyvinylidene chlorides, polymethyl methacrylates, polymethyl acrylates, polyvinyl alcohols, polymethacrylonitriles, polyvinyl acetates, polyvinyl pyrrolidones, polycarbonates, polyethylene terephthalates, polyhexamethylene adipamides, polycaprolactams, polyurethanes, polyethyleneimines, polybutadienes, polystyrenes or polyisoprenes, or derivatives thereof. The ion conductive polymer can be used alone, or in combination with two or more kinds. Also, a polymer containing a variety of a monomer which constitutes the above-mentioned polymer may be used.

(Positive electrode)

A positive electrode contains a positive electrode active substance, and the positive electrode active substance operates at a potential of 4.5 V or higher with respect to lithium. For example, the positive electrode is formed by binding a positive electrode active substance on a positive electrode collector with a positive electrode binder so that the positive electrode active substance covers the positive electrode collector.

Also, a positive electrode active substance operating at a potential of 4.5 V or higher with respect to lithium can be selected, for example, by a following method. First, a positive electrode containing a positive electrode active substance and Li metal are oppositely disposed through a separator in a battery and an electrolyte liquid is injected to produce a battery. After that, when charge and discharge are carried out at a constant current of, for example, 5 mAh/g per the mass of the positive electrode active substance in the positive electrode, an active substance which has a charge and discharge capacity of 10 mAh/g or more per the mass of the active substance at a potential of 4.5 V or higher with respect to lithium can be assume to be a positive electrode active substance operating at a potential of 4.5 V or higher with respect to lithium. Also, when charge and discharge are carried out at a constant current of 5 mAh/g per the mass of the positive electrode active substance in the positive electrode, the charge and discharge capacity per the mass of the active substance at a potential of 4.5 V or higher with respect to lithium is preferably 20 mAh/g or more, is more preferably 50 mAh/g or more, and is further preferably 100 mAh/g or more. The shape of the battery can be, for example, coin-type.

The positive electrode active substance contains an active substance which operates at a potential of 4.5 V or higher with respect to lithium and preferably contains a lithium manganese complex oxide represented by following formula (4). The lithium manganese complex oxide represented by following formula (4) is an active substance which operates at a potential of 4.5 V or higher with respect to lithium.

$$Li_a(M_xMn_{2-x-y}Y_y)(O_{4-w}Z_w) \qquad (4)$$

Wherein, in the formula, it satisfies 0.4[[0.5]] $\leq x \leq 1.2$, $0 \leq y$, $x+y < 2$, $0 \leq a \leq 1.2$ and $0 \leq w \leq 1$, M is at least one kind selected from the group consisting of among Co, Ni, Fe, Cr and Cu, Y is at least one kind selected from the group consisting of among Li, B, Na, Al, Mg, Ti, Si, K and Ca, and Z is at least one kind selected from the group consisting of among F and Cl.

In formula (4), M preferably contains Ni and is more preferably only Ni. It is because an active substance having a high capacity can relatively easily be obtained in the case where M contains Ni. In the case where M consists of only Ni, from the viewpoint of obtaining an active substance having a high capacity, x is preferably 0.4 or more and 0.6 or less. Also, since a high capacity of 130 mAh/g or more is obtained, the positive electrode active substance is preferably $LiNi_{0.5}Mn_{1.5}O_4$, high capacity 130 mAh/g or more.

Also, examples of the active substance operating at a potential of 4.5 V or higher with respect to lithium include, for example, $LiCrMnO_4$, $LiFeMnO_4$, $LiCoMnO_4$ and $LiCu_{0.5}Mn_{1.5}O_4$, and these positive electrode active substances has high capacity. Also, the positive electrode active substance may have a composition obtained by mixing this active substance and $LiNi_{0.5}Mn_{1.5}O_4$.

Also, the substitution of a part of Mn in this active substance with Li, B, Na, Al, Mg, Ti, Si, K, Ca or the like may enable improvement of the operating life. In other words, in formula (4), in the case of $0 < y$, the improvement of the operating life may be enabled. Among these, in the case where Y is Al, Mg, Ti or Si, the improvement effect of the operating life is high. Also, since the improvement effect of the operating life is obtained with keeping high capacity, it

is preferable that Y be Ti. The range of y is preferably more than 0 and 0.3 or less. When y is 0.3 or less, it becomes easy to suppress the decrease of the capacity.

Also, a moiety of oxygen can be substituted by F or Cl. In formula (4), when w is more than 0 and 1 or less, decrease of the capacity can be suppressed.

Also, examples of the active substance operating at a potential of 4.5 V or higher with respect to lithium include spinel-type substances or olivine-type substances. Examples of the spinel-type positive electrode active substance include, for example, $LiNi_{0.5}Mn_{1.5}O_4$, $LiCr_xMn_{2-x}O_4$ ($0.4 \leq x \leq 1.1$), $LiFe_xMn_{2-x}O_4$ ($0.4 \leq x \leq 1.1$), $LiCu_xMn_{2-x}O_4$ ($0.4 \leq x \leq 0.6$) or $LiCo_xMn_{2-x}O_4$ ($0.4 \leq x \leq 1.1$) and solid solutions thereof. Also, the examples of the olivine-type positive electrode active substance include, for example, $LiCoPO_4$ or $LiNiPO_4$.

Also, examples of the active substance operating at a potential of 4.5 V or higher with respect to lithium also include Si complex oxides, and the examples of the Si complex oxide include, for example, $Li_2MSiO_4$ (M: at least one kind of among Mn, Fe and Co).

Also, examples of the active substance operating at a potential of 4.5 V or higher with respect to lithium also include substances having a layer structure, and the examples of the positive electrode active substance having a layer structure include, for example, $Li(M1_xM2_yMn_{2-x-}y)O_2$ (M1 : at least one kind selected from the group consisting of among Ni, Co and Fe, M2: at least one kind selected from the group consisting of among Li, Mg and Al, $0.1 < x < 0.5$, $0.05 < y < 0.3$).

The specific surface area of the lithium manganese complex oxide represented by formula (4) is, for example, 0.01 to 5 $m^2/g$, is preferably 0.05 to 4 $m^2/g$, is more preferably 0.1 to 3 $m^2/g$, and is further preferably 0.2 to 2 $m^2/g$. When the specific surface area is in this range, the contact area with the electrolyte liquid can be adjusted to a suitable range. In other words, when the specific surface area is 0.01 $m^2/g$ or more, insertion and detachment of a lithium ion is easy to be smoothly performed and the resistance can be decreased more. Also, when the specific surface area is 5 $m^2/g$ or less, it can be suppressed to promote the decomposition of the electrolyte liquid and to elute a constituent element of the active substance.

The central particle diameter of the lithium manganese complex oxide is preferably 0.1 to 50 μm, and is more preferably 0.2 to 40 μm. When the particle diameter is 0.1 μm or more, the elution of the constituent element such as Mn can be suppressed more, and the deterioration by the contact with the electrolyte liquid can be also suppressed more. Also, when the particle diameter is 50 μm or less, insertion and desorption of a lithium ion is easy to be smoothly performed and the resistance can be decreased more. The measurement of the particle diameter can be carried out by a laser diffraction / scattering type particle size distribution measuring apparatus.

As described above, the positive electrode active substance contains an active substance operating at a potential of 4.5 V or higher with respect to lithium, but may contain a 4 V class active substance.

As a positive electrode binder, the same materials for a negative electrode binder can be used. Among these, from the standpoint of versatility and low cost, polyvinylidene fluorides are preferable. The amount of the positive electrode binder used is preferably 2 to 10 parts by mass with respect to 100 parts by mass of the positive electrode active substance from the standpoint of "sufficient binding force" and "high energy" which are trade-off to each other.

Examples of the positive electrode collector include, but should not be limited to, polyvinylidene fluorides (PVdF), vinylidene fluoride-hexafluoropropylene copolymers, vinylidene fluoride-tetrafluoroethylene copolymers, styrene-butadiene rubbers, polytetrafluoroethylenes, polypropylenes, polyethylenes, polyimides and polyamide-imides.

For the purpose of decreasing impedance, an electroconductive auxiliary material may be added to a positive electrode active substance layer containing a positive electrode active substance. Examples of the electroconductive auxiliary material include carbonaceous fine particles such as graphite, carbon black, and acetylene black.

(Negative electrode)

A negative electrode is not particularly limited as long as it contains a material that can absorb and desorb lithium ion as a negative electrode active substance.

Examples of the negative electrode active substance include, for example, but should not be limited to carbon material (a) that can absorb and desorb lithium ion, metal (b) that can be alloyed with lithium, or metal oxide (c) that can absorb and desorb lithium ion.

As carbon material (a), graphite, amorphous carbon, diamond-like carbon, carbon nanotube or a complex thereof can be used. Here, graphite having high crystallinity has high electroconductivity and excellent adhesiveness with a positive electrode collector consisting of metal such as copper or the like as well as excellent voltage flatness. On the other hand, since amorphous carbon having low crystallinity has relatively low volume expansion, there is a significant effect of relaxing the volume expansion of the entire negative electrode, and deterioration due to ununiformity such as a crystal grain boundary or a defect hardly occurs. Carbon material (a) can be used alone, or in combination with another material, but is preferably in a range of 2 mass% or more and 80 mass% or less in the negative electrode active substance, and is more preferably in a range of 2 mass% or more and 30 mass% or less.

As metal (b), a metal which contains Al, Si, Pb, Sn, Zn, Cd, Sb, In, Bi, Ag, Ba, Ca, Hg, Pd, Pt, Te or La as a

main component, an alloy of two or more kinds of these metals, or an alloy of this metal or this alloy with lithium can be used. In particular, it is preferable to contain silicon (Si) as metal (b). Metal (b) can be used alone, or in combination with another substance, but is preferably in a range of 5 mass% or more and 90 mass% or less in the negative electrode active substance, and is more preferably in a range of 20 mass% or more and 50 mass% or less.

As metal oxide (c), silicon oxide, aluminum oxide, tin oxide, indium oxide, zinc oxide, lithium oxide or a complex thereof can be used. In particular, it is preferable to contain silicon oxide as metal oxide (c). This is because silicon oxide is relatively stable and is hard to cause a reaction with another chemical compound. Also, one element or two or more elements selected from among nitrogen, boron and sulfur can be added as metal oxide (c), for example, in the amount of 0.1 to 5 mass%. By this, the electroconductivity of metal oxide (c) can be improved. Metal oxide (c) can be used alone, or in combination with another substance, but is preferably in a range of 5 mass% or more and 90 mass% or less in the negative electrode active substance, and is more preferably in a range of 40 mass% or more and 70 mass% or less.

Example of metal oxide (d) include, for example, $LiFe_2O_3$, $WO_2$, $MoO_2$, $SiO$, $SiO_2$, $CuO$, $SnO$, $SnO_2$, $Nb_3O_5$, $Li_xTi_{2-x}O_4$ ($1 \leq x \leq 4/3$)), $PbO_2$ and $Pb_2O_5$.

Also, in addition, examples of the negative electrode active substance include, for example, metal sulfide (d) that can absorb and desorb lithium ion. Examples of metal sulfide (d) include, for example, $SnS$ and $FeS_2$. Also, in addition, examples of the negative electrode active substance include, for example, metal lithium or a lithium alloy, a polyacene or a polythiophene, or a lithium nitride such as $Li_5(Li_3N)$, $Li_7MnN_4$, $Li_3FeN_2$, $Li_{2.5}Co_{0.5}N$ or $Li_3CoN$.

The above-mentioned negative electrode active substance can be used alone, or in mixed state with two or more kinds.

Also, the negative electrode active substance may be constituted of carbon material (a), metal (b) and metal oxide (c). As follows, this negative electrode active substance is explained.

As for metal oxide (c), all or a part thereof preferably has an amorphous structure. Metal oxide (c) having an amorphous structure can suppress the volume expansion of carbon material (a) or metal (b) and can suppress the decomposition of an electrolyte liquid. As this mechanism, the amorphous structure of metal oxide (c) is assumed to have some influence on coating formation at the interface between carbon material (a) and the electrolyte liquid. Also, it is assumed that the amorphous structure has a relatively small constituent due to ununiformity such as a crystal grain boundary or a defect. Note that, it can be confirmed by X-ray diffraction measurement (general XRD measurement) that all or a part of metal oxide (c) has an amorphous structure. Specifically, in the case where metal oxide (c) does not have an amorphous structure, a peak peculiar to metal oxide (c) is observed, while in the case where all or a part of metal oxide (c) has an amorphous structure, a observed peak peculiar to metal oxide (c) becomes to be broad.

Also, metal oxide (c) is preferably an oxide of a metal which constitutes metal (b). Also, metal (b) and metal oxide (c) are preferably silicon (Si) and silicon oxide (SiO), respectively.

As for metal (b), all or a part thereof is dispersed in metal oxide (c). The dispersion of at least a part of metal (b) in metal oxide (c) can suppress the volume expansion of the negative electrode as a whole and can also suppress the decomposition of an electrolyte liquid. Note that, it can be confirmed by transmission electron microscope observation (general TEM observation) and along with energy dispersive X-ray spectroscopy measurement (general EDX measurement) that all or a part of metal (b) is dispersed in metal oxide (c). Specifically, a section of a specimen containing metal (b) particle is observed and oxygen atom concentration of metal (b) particle which is dispersed in metal oxide (c) is measured, and thereby it can be confirmed that the metal which constitutes metal (b) particle does not become an oxide.

As mentioned above, the content of carbon material (a), the content of metal (b) and the content of metal oxide (c) with respect to the total of carbon material (a), metal (b) and metal oxide (c) are preferably 2 mass% more and 80 mass% or less, 5 mass% more and 90 mass% or less, and 5 mass% more and 90 mass% or less, respectively. Also, the content of carbon material (a), the content of metal (b) and the content of metal oxide (c) with respect to the total of carbon material (a), metal (b) and metal oxide (c) are more preferably 2 mass% more and 30 mass% or less, 20 mass% more and 50 mass% or less, and 40 mass% more and 70 mass% or less, respectively.

A negative electrode active substance, in which all or a part of metal oxide (c) has an amorphous structure and in which all or a part of metal (b) is dispersed in metal oxide (c), can be produced, for example, by the method disclosed in JP 2004-47404 A. That is, CVD processing of metal oxide (c) is carried out under an atmosphere containing organic substance gas such as methane gas, to obtain a complex in which metal (b) in metal oxide (c) is a nanocluster and in which the surface is covered with carbon material (a). Also, the above-mentioned negative electrode active substance is also produced by mixing carbon material (a), metal (b) and metal oxide (c) by mechanical milling.

Also, each of carbon material (a), metal (b) and metal oxide (c) can be, but should not particularly be limited to, a particle thereof. For example, the average particle diameter of metal (b) can be constituted in a range smaller than the average particle diameter of carbon material (a) and the average particle diameter of metal oxide (c). By this constitution, since metal (b), in which the volume change associated with charge and discharge is small, has a relatively small particle diameter, and since carbon material (a) and metal oxide (c), in which the volume change is large, has a relatively large particle diameter, dendrite generation and pulverization of alloy are more effectively suppressed. Also, in the process of charge and discharge, lithium is absorbed and desorbed from the larger diameter particle, the smaller

diameter particle and the larger diameter particle in this order. From this point, generations of the residual stress and the residual strain are suppressed. The average particle diameter of metal (b) can be, for example, 20 μm or less, and is preferably 15 μm or less.

Also, it is preferable that the average particle diameter of metal oxide (c) be a half or less of the average particle diameter of carbon material (a), and it is preferable that the average particle diameter of metal (b) be a half or less of the average particle diameter of metal oxide (c). Further, it is more preferable that the average particle diameter of metal oxide (c) be a half or less of the average particle diameter of carbon material (a) as well as that the average particle diameter of metal (b) be a half or less of the average particle diameter of metal oxide (c). Controlling the average particle diameter in this range can more advantageously give the effect of relaxing the volume expansion of the metal and alloy phase, and can provide a secondary battery having excellent balance of energy density, cycle life and efficiency. More specifically, it is preferable that the average particle diameter of silicon oxide (c) be a half or less of the average particle diameter of graphite (a) and that the average particle diameter of silicon (b) be a half or less of the average particle diameter of silicon oxide (c). Also, more specifically, the average particle diameter of silicon (b) can be, for example, 20 μm or less, and is preferably 15 μm or less.

Examples of a negative electrode binder include, but should not be limited to, polyvinylidene fluorides (PVdF), vinylidene fluoride-hexafluoropropylene copolymers, vinylidene fluoride-tetrafluoroethylene copolymers, styrene-butadiene copolymerized rubbers, polytetrafluoroethylenes, polypropylenes, polyethylenes, polyimides and polyamide-imides.

The amount of the negative electrode binder is preferably 1 to 30 mass% with respect to the total amount of the negative electrode active substance and the negative electrode binder, and is more preferably 2 to 25mass %. When it is 1 mass% or more, adhesiveness between the active substances or between the active substance and the collector is improved, and cycle property becomes good. Also, when it is 30 mass% or less, the ratio of the active substance is improved, and the negative electrode capacity can be improved.

A negative electrode collector is not particularly limited, but aluminum, nickel, copper, silver and alloys thereof are preferable from the electrochemical stability. Examples of the shape thereof include foil, flat plate and mesh.

A negative electrode can be produced by forming a negative electrode active substance layer containing a negative electrode active substance and a negative electrode binder on a negative electrode collector. Examples of the method of forming the negative electrode active substance layer include doctor blade method, die coater method, CVD method, and sputtering method. A negative electrode active substance layer is first formed, and a thin film of aluminum, nickel or an alloy thereof is thereafter formed by vapor deposition, sputtering or the like to obtain the negative electrode collector.

(Separator)

The secondary battery can be constituted of a combination of a positive electrode, a negative electrode, a separator and a nonaqueous electrolyte as the configuration. Examples of the separator include, for example, woven cloths, nonwoven cloths, porous polymer films of a polyolefin such as a polyethylene or a polypropylene and of a polyimide or a porous polyvinylidene fluoride film, or ion conductivity polymer electrolyte films. This can be used alone, or in combination.

(Shape of battery)

Examples of the shape of the battery include, for example, tubular-type, square-shape, coin-type, button-type and laminate-type. Examples of the package of the battery include, for example, stainless steel, iron, aluminum, titanium or an alloying thereof, or plated finished articles thereof. Examples of the plating include, for example, nickel plating.

Also, examples of the laminating resin film used for the laminate-type include, for example, aluminum, aluminum alloys and titanium foil. Example of the material of the heat welded part of the metal laminating resin film include, for example, thermoplastic polymer materials such as polyethylenes, polypropylenes and polyethylene terephthalates. Also, the metal laminating resin layer and the metal foil layer are not limited to 1 layer, respectively, and may be two or more layers.

The package can appropriately be selected as long as it has stability to the electrolyte liquid and sufficient moisture barrier property. For example, in the case of the stacked laminate type secondary battery, a laminate film of a polypropylene, polyethylene or the like which is coated with aluminum or silica can be used as the package. In particular, an aluminum laminate film is preferably used from a viewpoint of suppressing volume expansion.

(Embodiment of negative electrode)

In addition to the above-mentioned negative electrode, following negative electrode active substances can be

preferably used in an exemplary embodiment of the invention.

Graphite whose surface is covered with a low crystalline carbon material can be used as the negative electrode active substance. By covering the graphite surface with a low crystalline carbon material, the energy density is high, and the reaction of the negative electrode active substance and the electrolyte liquid can be suppressed even if graphite with high electroconductivity is used as the negative electrode active substance. Therefore, by using graphite which is covered with a low crystalline carbon material as the negative electrode active substance, the capacity retention ratio of the battery can be improved and the battery capacity can be also improved.

As for the low crystalline carbon material covering the graphite surface, ratio $I_D/I_G$ of the peak intensity ($I_D$) of D peak generated in a range of 1300 $cm^{-1}$ to 1400 $cm^{-1}$ with respect to the peak intensity ($I_G$) of G peak generated in a range of 1550 $cm^{-1}$ to 1650 $cm^{-1}$ in Raman spectrum obtained by laser Raman analysis is preferably 0.08 or more and 0.5 or less. In general, the carbon having high crystallinity has a low $I_D/I_G$ value, and the carbon having low crystallinity has a high $I_D/I_G$ value. When the $I_D/I_G$ is 0.08 or more, even if it operates at a high voltage, the reaction of graphite and the electrolyte liquid can be suppressed and the capacity retention ratio of the battery can be improved. If the $I_D/I_G$ is 0.5 or less, the battery capacity can be improved. Also, the $I_D/I_G$ is more preferably 0.1 or more and 0.4 or less.

For laser Raman analysis of the low crystalline carbon material, for example, an argon ion laser Raman analyzer device can be used. In the case of a material with a large laser absorption such as the carbon material, the laser is absorbed in from the surface to several 10 nm. Therefore, by laser Raman analysis of the graphite whose surface is covered with a low crystalline carbon material, the information of the low crystallinity carbon material located in the surface is substantially obtained.

The $I_D$ value or the $I_G$ value can be calculated from laser Raman spectrum measured by the following conditions.

Laser Raman spectroscopy equipment: Ramanor T-64000 (made by Jobin Yvon / Atago Bussan Co., Ltd.)

Measurement mode: macro-Raman
Measurement disposition: 60°
Beam diameter: 100 μm
Light source: $Ar^+$ laser beam / 514.5 nm
Leather power: 10 mW
Diffraction grating: Single 600 gr/mm
Dispersion: Single 21 A/mm
Slit: 100 μm
Detector: CCD / Jobin Yvon 1024256

The graphite covered with a low crystalline carbon material can be obtained, for example, by covering a particulate graphite with a low crystallinity carbon material. The average particle diameter (volume average: $D_{50}$) of the graphite particle is preferably 5 μm or more and 30 μm or less. The graphite preferably has crystallinity, and the $I_D/I_G$ value of the graphite is preferably 0.01 or more and 0.08 or less.

The thickness of the low crystalline carbon material is preferably 0.01 μm or more and 5 μm or less, and is more preferably 0.02 μm and 1 μm or less.

The average particle diameter ($D_{50}$) can be measured, for example, by using laser diffraction / scattering particle diameter / particle size distribution measuring apparatus Microtrac MT3300EX (NIKKISO CO., LTD.).

The low crystalline carbon material can be formed on the surface of graphite, for example, by using a gas phase method in which a hydrocarbon such as propane or acetylene is decomposed by heat to deposit carbon. Also, the low crystalline carbon material can be formed, for example, by using a method in which pitch or tar is attached on the surface of graphite and is calcined at 800 to 1500°C.

In the crystal structure, interlayer spacing $d_{002}$ of 002 layer of the graphite is preferably 0.33 nm or more and 0.34 nm or less, is more preferably 0.333 nm or more and 0.337 nm or less, and is further preferably 0.336 nm or less. This high crystalline graphite has high lithium absorption capacity, and the efficiency to charge and discharge can be improved.

The interlayer spacing of the graphite can be measured by X-ray diffraction.

The specific surface area of the graphite covered with a low crystalline carbon material is, for example, 0.01 to 20 $m^2/g$, is preferably 0.05 to 10 $m^2/g$, is more preferably 0.1 to 5 $m^2/g$, and is further preferably 0.2 to 3 $m^2/g$. When the specific surface area of the graphite covered with a low crystalline carbon is 0.01 $m^2/g$ or more, since insertion and desorption of a lithium ion is easy to be smoothly performed, the resistance can be decreased more. When the specific surface area of the graphite covered with a low crystalline carbon is 20 $m^2/g$ or less, since insertion and desorption of a lithium ion is easy to be smoothly performed, the decomposition of the electrolyte liquid can be suppressed more and the elution of the constituent element of the active substance can be suppressed more.

The graphite as a substrate is a high crystalline graphite, and, for example, a synthetic graphite and a natural graphite can be used, but it is not particularly limited to this. As a raw material of low crystalline carbon, for example, a

mixture of coal tar, pitch coke or a phenol resin and a synthetic graphite or a natural graphite can be used. A low crystalline carbon is mixed with a high crystalline carbon (a synthetic graphite or a natural graphite) in 5 to 50 mass% to prepare a mixture. After the mixture is heated to 150°C to 300°C, it is further heat-treated in a range of 600°C to 1500°C. By this, a surface-treated graphite whose surface is covered with a low crystalline carbon can be obtained. The heat treatment is preferably carried out under inert atmosphere such as argon, helium or nitrogen.

The negative electrode active substance may contain another active substance together with graphite covered with a low crystalline carbon material.

EXAMPLES

As follows, specific Examples to which the present invention is applied are described, but the present invention is not limited to the present Examples and can appropriately be changed and performed without departing from the intention. FIG. 1 is a schematic view showing a configuration of the lithium secondary batteries produced in the present Examples.

As shown in FIG. 1, the lithium secondary battery has positive electrode active substance layer 1 which contains a positive electrode active substance on positive electrode collector 3 made of a metal such as aluminum foil and negative electrode active substance layer 2 which contains a negative electrode active substance on negative electrode collector 4 made of a metal such as copper foil. Positive electrode active substance layer 1 and negative electrode active substance layer 2 are oppositely disposed through an electrolyte liquid and separator 5 which is constituted of a nonwoven fabric, a polypropylene fine-porous film, or the like which contains the electrolyte liquid. In FIG. 1, signs 6 and 7 represent a package, sign 8 represents a negative electrode tab, and sign 9 represents a positive electrode tab.

(Production Example)

Positive electrode active substances of the present Examples were produced as follows.

As a raw material, materials were selected from $MnO_2$, NiO, $Fe_2O_3$, $TiO_2$, $B_2O_3$, CoO, $Li_2CO_3$, MgO, $Al_2O_3$ and LiF, and they were weighed so as to be in a intended ratio and were pulverized and mixed. A powder after a mixing of the raw materials was calcined at a calcining temperature of 500 to 1000°C for 8 hours to obtain a following positive electrode active substance.

$LiNi_{0.5}Mn_{1.5}O_4$

$LiNi_{0.5}Mn_{1.35}Ti_{0.15}O_4$

$LiNi_{0.5}Mn_{1.48}Al_{0.02}O_4$

$LiNi_{0.5}Mn_{1.48}Mg_{0.02}O_4$

$LiNi_{0.5}Mn_{1.49}B_{0.01}O_4$

$LiNi_{0.5}Mn_{1.45}Al_{0.05}O_{3.95}F_{0.05}$

$LiNi_{0.5}Mn_{1.48}Si_{0.02}O_{3.95}F_{0.05}$

$LiNi_{0.4}Co_{0.2}Mn_{1.25}Ti_{0.5}O_4$

$LiNi_{0.4}Fe_{0.2}Mn_{1.25}Ti_{0.15}O_4$

$Li(Mn_{1.9}Li_{0.1})O_4$

$LiNi_{1/3}Co_{1/3}Mn_{1/3}O_2$

As the result of evaluating specific surface areas of the obtained positive electrode active substances by the BET method, they were 0.1 to 2.0 $m^2/g$.

<Measurement of average discharge potential>

The average discharge potential with respect to lithium of the obtained positive electrode active substances

was measured as follows.

The obtained positive electrode active substance, a polyvinylidene fluoride as a binder (5 mass%) and carbon black as a electroconductive agent (5 mass%) were mixed to be a positive electrode mixture. The positive electrode mixture was dispersed in N-methyl-2-pyrrolidone to prepare a slurry for measure. This slurry for measure was uniformly applied on one side of a collector made of aluminum with a thickness of 20 μm. The thickness of the applied film was adjusted so that the first charge capacity per unit area became 2.5 mAh/cm$^2$. After dried, it was compressed and molded with a roll press to produce a positive electrode for measure.

Lithium metal was used as a negative electrode for measure.

The positive electrode for measure and the negative electrode for measure which were cut to circle shape with a diameter of 12 mm were oppositely disposed through a separator. As the separator, a fine-porous polypropylene film with a thickness of 25 μm was used.

As a nonaqueous electrolyte solvent, a mixed solvent of ethylene carbonate (EC) and diethyl carbonate (DEC) at a volume ratio of 30/70 was used. $LiPF_6$ was dissolved in this nonaqueous electrolyte solvent in a concentration of 1 mol/l to prepare an electrolyte liquid.

The positive electrode, the negative electrode and the electrolyte liquid were disposed and enclosed in a coin-type battery to produce a coin-type battery. The first charge capacity of this battery is about 2.83 mAh from the first charge capacity of 2.5 mAh/cm$^2$ and the area of the 12 mm diameter.

In the coin-type battery produced in this way, charge and discharge were carried out within the range of the upper limit voltage of 5 V and the lower limit voltage of 3 V with the constant current of 70 μA which is 0.025 times the value of the first charge capacity (2.83 x 0.025 x 1000). The discharge curve was plotted (discharge potential vs. discharge capacity), and the average discharge potential was derived from this discharge curve.

(Example 1)

$LiNi_{0.5}Mn_{1.5}O_4$ as the positive electrode active substance, a polyvinylidene fluoride (5 mass%) as the binder and carbon black as the electroconductive agent (5 mass%) were mixed to be a positive electrode mixture. The positive electrode mixture was dispersed in N-methyl-2-pyrrolidone to prepare a positive electrode slurry. This positive electrode slurry was uniformly applied to one side of a collector made of aluminum with a thickness of 20 μm. The thickness of the applied film was adjusted so that the first charge capacity per unit area became 2.5 mAh/cm$^2$. After dried, it was compressed and molded with a roll press to produce a positive electrode.

Synthetic graphite was used as a negative electrode active substance. The synthetic graphite was dispersed in N-methylpyrrolidone in which a PVDF was dissolved, to prepare a negative electrode slurry. The mass ratio of the negative electrode active substance and the binder was set to be 90/10. This negative electrode slurry was uniformly applied on a Cu collector with a thickness of 10 μm. The thickness of the applied film was adjusted so that the first charge capacity became 3.0 mAh/cm$^2$. After dried, it was compressed and molded with a roll press to produce a negative electrode.

The positive electrode and the negative electrode which were cut to 3 cm x 3 cm were oppositely disposed through a separator. As the separator, a fine-porous polypropylene film with a thickness of 25 μm was used.

As the nonaqueous electrolyte solvent, a solvent, which was obtained by mixing ethylene carbonate (EC), diethyl carbonate (DEC) and tris(2,2,2-trifluoroethyl) phosphate at a volume ratio of 24/56/20, was used. $LiPF_6$ was dissolved in this nonaqueous electrolyte solvent in a concentration of 1 mol/l to prepare an electrolyte liquid. Hereinafter, the solvent, which was obtained by mixing EC, DEC and tris(2,2,2-trifluoroethyl) phosphate at a volume ratio of 24/56/20 is also abbreviated to solvent EC/DEC/PTTFE.

The above-mentioned positive electrode, the negative electrode, the separator and the electrolyte liquid were disposed in a laminate package, and then the laminate was sealed to produce a lithium secondary battery. The positive electrode and the negative electrode were connected to tabs and were electrically connected to the outside of the laminate.

At a temperature of 20°C, charge and discharge were carried out in the following charge conditions and discharge conditions.

Charge conditions: constant current and constant voltage system, charge final voltage of 4.8 V, charge current of 22.5 mA, total charge time of 2.5 hours

Discharge condition: constant current discharge, discharge final voltage of 3.0 V, discharge current of 20 mA

The discharge capacity of the produced battery was about 20 mAh.

Then, the charge and discharge cycle tests of these batteries were carried out. The charge and discharge cycle test was carried out at a temperature of 45°C in the following conditions.

Charge conditions: constant current and constant voltage system, charge final voltage of 4.8 V, charge current of 20 mA, total charge time of 2.5 hours

Discharge condition: constant current discharge, discharge final voltage of 3.0 V, discharge current of 20 mA

The capacity retention ratio (%) is the percentage of the discharge capacity (mAh) after 100 cycles with respect

to the discharge capacity (mAh) at the 1st cycle. $LiNi_{0.5}Mn_{1.5}O_4$ was used as the positive electrode active substance.

(Example 2)

A solvent was prepared by mixing ethylene carbonate (EC), dimethyl carbonate (DMC) and tris(2,2,2-trifluoroethyl) phosphate at a volume ratio of 24/56/20. Hereinafter, this solvent is also abbreviated to solvent EC/DMC/PTTFE.
And, a secondary battery was produced and evaluated in the same manner as in Example 1 except that solvent EC/DMC/PTTFE was used as the nonaqueous electrolyte solvent. The result is shown in TABLE 1.

(Comparative Example 1)

A secondary battery was produced in the same manner as in Example 1 except that $Li(Mn_{1.9}Li_{0.1})O_4$ was used as the positive electrode active substance and that a solvent obtained by mixing EC and DEC) at a volume ratio of 30/70 (hereinafter, also abbreviated to solvent EC/DEC) was used as the nonaqueous electrolyte solvent. And, it was estimated in the same manner as in Example 1 except that the charge final voltage was set to be 4.2 V. The result is shown in TABLE 1. The average discharge potential was estimated in the same manner as in Example 1 except that the range of charge and discharge voltage was set to be from 4.3 V to 3 V. The result is shown in TABLE 1.

(Comparative Example 2)

A secondary battery was produced in the same manner as in Example 1 except that $Li(Mn_{1.9}Li_{0.1})O_4$ was used as the positive electrode active substance. And, it was estimated in the same manner as in Example 1 except that the charge final voltage was set to be 4.2 V. The result is shown in TABLE 1. The average discharge potential was estimated in the same manner as in Example 1 except that the range of charge and discharge voltage was set to be from 4.3 V to 3 V. The result is shown in TABLE 1.

(Comparative Example 3)

A secondary battery was produced in the same manner as in Example 1 except that $LiNi_{1/3}Co_{1/3}Mn_{1/3}O_2$ was used as the positive electrode active substance and that solvent EC/DEC was used as the nonaqueous electrolyte solvent. And, it was estimated in the same manner as in Example 1 except that the charge final voltage was set to be 4.2 V. The result is shown in TABLE 1. The average discharge potential was estimated in the same manner as in Example 1 except that the range of charge and discharge voltage was set to be from 4.3 V to 3 V. The result is shown in TABLE 1.

(Comparative Example 4)

A secondary battery was produced in the same manner as in Example 1 except that $LiNi_{1/3}Co_{1/3}Mn_{1/3}O_2$ was used as the positive electrode active substance. And, it was estimated in the same manner as in Example 1 except that the charge final voltage was set to be 4.2 V. The result is shown in TABLE 1. The average discharge potential was estimated in the same manner as in Example 1 except that the range of charge and discharge voltage was set to be from 4.3 V to 3 V. The result is shown in TABLE 1.

(Comparative Example 5)

A secondary battery was produced in the same manner as in Example 1 except that $LiNi_{0.5}Mn_{1.5}O_4$ was used as the positive electrode active substance and that solvent EC/DEC was used as the nonaqueous electrolyte solvent. And, it was estimated in the same manner as in Example 1. The result is shown in TABLE 1. The average discharge potential was estimated in the same manner as in Example 1. The result is shown in TABLE 1.

(Comparative Example 6)

A solvent was prepared by mixing ethylene carbonate (EC) and dimethyl carbonate (DMC) at a volume ratio of 30/70. Hereinafter, this solvent is also abbreviated to solvent EC/DMC. And, a secondary battery was produced in the same manner as in Example 1 except that $LiNi_{0.5}Mn_{1.5}O_4$ was used as the positive electrode active substance and that solvent EC/DMC was used as the nonaqueous electrolyte solvent. And, it was estimated in the same manner as in Example 1. The result is shown in TABLE 1. The average discharge potential was estimated in the same manner as in Example 1. The result is shown in TABLE 1.
33

TABLE 1

| Capacity retention ratio after 100 cycles at 45°C | | | | | | |
|---|---|---|---|---|---|---|
| | positive electrode | average discharge potential | nonaqueous electrolyte solvent | negative electrode | range of charge/ discharge | capacity retention ratio |
| Ex. 1 | $LiNi_{0.5}Mn_{1.5}O_4$ | 4.65 | EC/DEC/PTTFE = 24/56/20 | graphite | 4.8 V to 3 V | 65 % |
| Ex. 2 | $LiNi_{0.5}Mn_{1.5}O_4$ | 4.65 | EC/DMC/PTTFE = 24/56/20 | graphite | 4.8 V to 3 V | 72 % |
| Comp. Ex. 1 | $Li(Mn_{1.9}Li_{0.1})O_4$ | 4.0 | EC/DEC = 30/70 | graphite | 4.2 V to 3 V | 85 % |
| Comp. Ex. 2 | $Li(Mn_{1.9}Li_{0.1})O_4$ | 4.0 | EC/DEC/PTTFE = 24/56/20 | graphite | 4.2 V to 3 V | 78 % |
| Comp. Ex. 3 | $LiNi_{1/3}Co_{1/3}Mn_{1/3}O_2$ | 3.8 | EC/DEC = 30/70 | graphite | 4.2 V to 3 V | 86 % |
| Comp. Ex. 4 | $LiNi_{1/3}Co_{1/3}Mn_{1/3}O_2$ | 3.8 | EC/DEC/PTTFE = 24/56/20 | graphite | 4.2 V to 3 V | 82 % |
| Comp. Ex. 5 | $LiNi_{0.5}Mn_{1.5}O_4$ | 4.65 | EC/DEC = 30/70 | graphite | 4.8 V to 3 V | 12 % |
| Comp. Ex. 6 | $LiNi_{0.5}Mn_{1.5}O_4$ | 4.65 | EC/DMC = 30/70 | graphite | 4.8 V to 3 V | 52 % |

In the case where a positive electrode active substance operating at a potential of 4.2 V or lower with respect to lithium such as $Li(Mn_{1.9}Li_{0.1})O_4$ of Comparative Examples 1 and 2 or $LiNi_{1/3}Co_{1/3}Mn_{1/3}O_2$ of Comparative Examples 3 and 4 was used, the capacity retention ratio by using solvent EC/DEC/PTTFE was equivalent or was decreased more in comparison with using solvent EC/DEC. Because, in the range of normal charge final voltage 4.2V, the decomposition in the positive electrode side is not so remarkable, it is assumed that the improving effect by the addition of PTTFE to the electrolyte liquid cannot have been observed.

On the other hand, in Examples 1 and 2 where a positive electrode active substance operating at a potential of 4.5 V or higher with respect to lithium was used, the capacity retention ratio was improved by mixing PTTFE. Note that, in Comparative Examples 5 and 6 where a positive electrode active substance having a potential of 4.5 V or higher with respect to lithium was used, decrease of the capacity was remarkable in the case of solvent EC/DEC and solvent EC/DMC.

As the reason why the capacity retention ratio is improved by the addition of PTTFE in the case where a positive electrode active substance operating at a potential of 4.5 V or higher with respect to lithium was used, it is assumed that PTTFE has high oxidation resistance and is effective in suppressing the decomposition reaction of the electrolyte liquid in the positive electrode side.

Then, the positive electrode active substances shown in TABLE 2 were used as the positive electrode active substance operating at a potential of 4.5 V or higher with respect to lithium, and they were evaluated in the same manner as in Example 1. All positive electrode active substances are a material operating at a potential of 4.5 V or higher with respect to lithium.

(Example 3)

A secondary battery was produced and evaluated in the same manner as in Example 1 except that $LiNi_{0.5}Mn_{1.5}O_4$ was used as the positive electrode active substance. The result is shown in TABLE 2.

(Example 4)

A secondary battery was produced and evaluated in the same manner as in Example 1 except that $LiNi_{0.5}Mn_{1.35}Ti_{0.15}O_4$ was used as the positive electrode active substance.

(Example 5)

A secondary battery was produced and evaluated in the same manner as in Example 1 except that $LiNi_{0.5}Mn_{1.48}Al_{0.02}O_4$ was used as the positive electrode active substance. The result is shown in TABLE 2.

(Example 6)

A secondary battery was produced and evaluated in the same manner as in Example 1 except that $LiNi_{0.5}Mn_{1.48}Mg_{0.02}O_4$ was used as the positive electrode active substance. The result is shown in TABLE 2.

(Example 7)

A secondary battery was produced and evaluated in the same manner as in Example 1 except that $LiNi_{0.5}Mn_{1.49}B_{0.01}O_4$ was used as the positive electrode active substance. The result is shown in TABLE 2.

(Example 8)

A secondary battery was produced and evaluated in the same manner as in Example 1 except that $LiNi_{0.5}Mn_{1.45}Al_{0.05}O_{3.95}F_{0.05}$ was used as the positive electrode active substance. The result is shown in TABLE 2.

(Example 9)

A secondary battery was produced and evaluated in the same manner as in Example 1 except that $LiNi_{0.5}Mn_{1.48}Si_{0.02}O_{3.95}F_{0.05}$ was used as the positive electrode active substance. The result is shown in TABLE 2.

(Example 10)

A secondary battery was produced and evaluated in the same manner as in Example 1 except that $LiNi_{0.4}Co_{0.2}Mn_{1.25}Ti_{0.15}O_4$ was used as the positive electrode active substance. The result is shown in TABLE 2.

(Example 11)

A secondary battery was produced and evaluated in the same manner as in Example 1 except that $LiNi_{0.4}Fe_{0.2}Mn_{1.25}Ti_{0.15}O_4$ was used as the positive electrode active substance. The result is shown in TABLE 2.

(Example 12)

A secondary battery was produced and evaluated in the same manner as in Example 1 except that $LiNi_{0.5}Mn_{1.35}Ti_{0.15}O_4$ was used as the positive electrode active substance and except that an Si/SiO/C negative electrode active substance was used instead of graphite. The result is shown in TABLE 2.

The Si/SiO/C negative electrode active substance is a material containing above-mentioned carbon material (a), metal (b) and metal oxide (c). A silicon having an average particle diameter of 5 μm as metal (b), an amorphous silicon oxide ($SiO_x$, $0 < x \leq 2$) having an average particle diameter of 13 μm as metal oxide (c), and graphite having an average particle diameter of 30 μm as carbon material (a) were weighed at a mass ratio of 29:61:10. Then, these materials were mixed by so-called mechanical milling for 24 hours to obtain a negative electrode active substance. Note that, in this negative electrode active substance, the silicon that is metal (b) was dispersed in the silicon oxide ($SiO_x$, $0 < x \leq 2$) that is metal oxide (c).

(Example 13)

A secondary battery was produced and evaluated in the same manner as in Example 1 except that $LiNi_{0.5}Mn_{1.35}Ti_{0.15}O_4$ was used as the positive electrode active substance and except that a hard carbon (HC) was used as the negative electrode active substance instead of graphite. The result is shown in TABLE 2.

(Comparative Example 7)

A secondary battery was produced and evaluated in the same manner as in Example 3 except that solvent EC/DEC was used instead of solvent EC/DEC/PTTFE. The result is shown in TABLE 2.

(Comparative Example 8)

A secondary battery was produced and evaluated in the same manner as in Example 4 except that solvent EC/DEC was used instead of solvent EC/DEC/PTTFE. The result is shown in TABLE 2.

(Comparative Example 9)

A secondary battery was produced and evaluated in the same manner as in Example 5 except that solvent EC/DEC was used instead of solvent EC/DEC/PTTFE. The result is shown in TABLE 2.

(Comparative Example 10)

A secondary battery was produced and evaluated in the same manner as in Example 6 except that solvent EC/DEC was used instead of solvent EC/DEC/PTTFE. The result is shown in TABLE 2.

(Comparative Example 11)

A secondary battery was produced and evaluated in the same manner as in Example 7 except that solvent EC/DEC was used instead of solvent EC/DEC/PTTFE. The result is shown in TABLE 2.

(Comparative Example 12)

A secondary battery was produced and evaluated in the same manner as in Example 8 except that solvent EC/DEC was used instead of solvent EC/DEC/PTTFE. The result is shown in TABLE 2.

(Comparative Example 13)

A secondary battery was produced and evaluated in the same manner as in Example 9 except that solvent EC/DEC was used instead of solvent EC/DEC/PTTFE. The result is shown in TABLE 2.

(Comparative Example 14)

A secondary battery was produced and evaluated in the same manner as in Example 10 except that solvent EC/DEC was used instead of solvent EC/DEC/PTTFE. The result is shown in TABLE 2.

(Comparative Example 15)

A secondary battery was produced and evaluated in the same manner as in Example 11 except that solvent EC/DEC was used instead of solvent EC/DEC/PTTFE. The result is shown in TABLE 2.

(Comparative Example 16)

A secondary battery was produced and evaluated in the same manner as in Example 12 except that solvent EC/DEC was used instead of solvent EC/DEC/PTTFE. The result is shown in TABLE 2.

(Comparative Example 17)

A secondary battery was produced and evaluated in the same manner as in Example 13 except that solvent EC/DEC was used instead of solvent EC/DEC/PTTFE. The result is shown in TABLE 2.

TABLE 2

| | positive electrode | average discharge potential | nonaqueous electrolyte solvent | negative electrode | range of charge/ discharge | capacity retention ratio |
|---|---|---|---|---|---|---|
| Ex. 3 | $LiNi_{0.5}Mn_{1.5}O_4$ | 4.65 | EC/DEC/ PTTFE = 24/56/20 | graphite | 4.8 V to 3 V | 65 % |

(continued)

| | positive electrode | average discharge potential | nonaqueous electrolyte solvent | negative electrode | range of charge/ discharge | capacity retention ratio |
|---|---|---|---|---|---|---|
| Ex. 4 | $LiNi_{0.5}Mn_{1.35}Ti_{0.15}O_4$ | 4.68 | EC/DEC/ PTTFE = 24/56/20 | graphite | 4.8 V to 3 V | 75 % |
| Ex. 5 | $LiNi_{0.5}Mn_{1.48}Al_{0.02}O_4$ | 4.66 | EC/DEC/ PTTFE = 24/56/20 | graphite | 4.8 V to 3 V | 70 % |
| Ex. 6 | $LiNi_{0.5}Mn_{1.48}Mg_{0.02}O_4$ | 4.65 | EC/DEC/ PTTFE = 24/56/20 | graphite | 4.8 V to 3 V | 67 % |
| Ex. 7 | $LiNi_{0.5}Mn_{1.49}B_{0.01}O_4$ | 4.65 | EC/DEC/ PTTFE = 24/56/20 | graphite | 4.8 V to 3 V | 68 % |
| Ex. 8 | $LiNi_{0.5}Mn_{1.45}Al_{0.05}O_{3.95}F_{0.05}$ | 4.67 | EC/DEC/ PTTFE = 24/56/20 | graphite | 4.8 V to 3 V | 71 % |
| Ex. 9 | $LiNi_{0.5}Mn_{1.48}Si_{0.02}O_{3.95}F_{0.05}$ | 4.66 | EC/DEC/ PTTFE = 24/56/20 | graphite | 4.8 V to 3 V | 70 % |
| Ex. 10 | $LiNi_{0.4}Co_{0.2}Mn_{1.25}Ti_{0.15}O_4$ | 4.67 | EC/DEC/ PTTFE = 24/56/20 | graphite | 4.8 V to 3 V | 74 % |
| Ex. 11 | $LiNi_{0.4}Fe_{0.2}Mn_{1.25}Ti_{0.15}O_4$ Tio.1504 | 4.61 | EC/DEC/ PTTFE = 24/56/20 | graphite | 4.8 V to 3 V | 74 % |
| Ex. 12 | $LiNi_{0.5}Mn_{1.35}Ti_{0.15}O_4$ | 4.68 | EC/DEC/ PTTFE = 24/56/20 | Si/SiO/C | 4.8 V to 3 V | 67 % |
| Ex. 13 | $LiNi_{0.5}Mn_{1.35}Ti_{0.15}O_4$ | 4.68 | EC/DEC/ PTTFE = 24/56/20 | HC | 4.8 V to 3 V | 75 % |
| Comp. Ex. 7 | $LiNi_{0.5}Mn_{1.5}O_4$ | 4.65 | EC/DEC = 30/70 | graphite | 4.8 V to 3 V | 13 % |
| Comp. Ex. 8 | $LiNi_{0.5}Mn_{1.35}Ti_{0.15}O_4$ | 4.68 | EC/DEC = 30/70 | graphite | 4.8 V to 3 V | 12 % |
| Comp. Ex. 9 | $LiNi_{0.5}Mn_{1.48}Al_{0.02}O_4$ | 4.66 | EC/DEC = 30/70 | graphite | 4.8 V to 3 V | 9 % |
| Comp. Ex. 10 | $LiNi_{0.5}Mn_{1.48}Mg_{0.02}O_4$ | 4.65 | EC/DEC = 30/70 | graphite | 4.8 V to 3 V | 15 % |
| Comp. Ex. 11 | $LiNi_{0.5}Mn_{1.49}B_{0.01}O_4$ | 4.65 | EC/DEC = 30/70 | graphite | 4.8 V to 3 V | 16 % |
| Comp. Ex. 12 | $LiNi_{0.5}Mn_{1.48}Al_{0.05}O_{3.95}F_{0.05}$ | 4.67 | EC/DEC = 30/70 | graphite | 4.8 V to 3 V | 13 % |
| Comp. Ex. 13 | $LiNi_{0.5}Mn_{1.48}Si_{0.02}O_{3.95}F_{0.05}$ | 4.66 | EC/DEC = 30/70 | graphite | 4.8 V to 3 V | 10 % |

(continued)

| | positive electrode | average discharge potential | nonaqueous electrolyte solvent | negative electrode | range of charge/ discharge | capacity retention ratio |
|---|---|---|---|---|---|---|
| Comp. Ex. 14 | $LiNi_{0.4}Co_{0.2}Mn_{1.25}Ti_{0.15}O_4$ | 4.67 | EC/DEC = 30/70 | graphite | 4.8 V to 3 V | 8 % |
| Comp. Ex. 15 | $LiNi_{0.4}Co_{0.2}Mn_{1.25}Ti_{0.15}O_4$ | 4.61 | EC/DEC = 30/70 | graphite | 4.8 V to 3 V | 7 % |
| Comp. Ex. 16 | $LiNi_{0.5}Mn_{1.35}Ti_{0.15}O_4$ | 4.68 | EC/DEC = 30/70 | Si/SiO/C | 4.8 V to 3 V | 5 % |
| Comp. Ex. 17 | $LiNi_{0.5}Mn_{1.35}Ti_{0.15}O_4$ | 4.68 | EC/DEC = 30/70 | HC | 4.8 V to 3 V | 19 % |

As a result of TABLE 2, in a variety of the positive electrode active substances operating at a potential of 4.5 V or higher with respect to lithium, a large improving effect was observed in the electrolyte liquid containing PTTFE. From these results, in the case of using the positive electrode active substance operating at a potential of 4.5 V or higher with respect to lithium, it has been confirmed that the operating life can be improved by using the electrolyte liquid containing a fluorine-containing phosphate. In particular, it is known that high capacity is obtained in the case of the 5 V class positive electrode containing Ni such as $LiNi_{0.5}Mn_{1.5}O_4$, and it is expected that a battery having high capacity and long operating life is obtained by using these positive electrode active substances.

Also, as shown in Examples 12 and 13, even if the negative electrode material was changed, a similar effect was obtained. From the result, the effect of the present invention is an effect of improving the positive electrode operating at a high potential and the electrolyte liquid, and no matter what the negative electrode material is, a similar effect is expected.

Subsequently, the kind of the fluorine-containing phosphate was studied.

(Example 14)

A secondary battery was produced and evaluated in the same manner as in Example 1 except that a solvent obtained by mixing EC/DEC/fluorine-containing phosphate at a ratio of 30/40/30 was used as the nonaqueous electrolyte solvent and except that $LiNi_{0.5}Mn_{1.35}Ti_{0.15}O_4$ was used as the positive electrode active substance. Tris(2,2,2-trifluoroethyl) phosphate was used as the fluorine-containing phosphate. The result is shown in TABLE 3.

(Example 15)

A secondary battery was produced and evaluated in the same manner as in Example 14 except that tris(2,2,3,3-tetrafluoropropyl) phosphate was used as the fluorine-containing phosphate instead of tris(2,2,2-trifluoroethyl) phosphate. The result is shown in TABLE 3.

(Example 16)

A secondary battery was produced and evaluated in the same manner as in Example 14 except that tris(2,2,3,3,3-pentafluoropropyl) phosphate was used as the fluorine-containing phosphate instead of tris(2,2,2-trifluoroethyl) phosphate. The result is shown in TABLE 3.

(Comparative Example 18)

A secondary battery was produced and evaluated in the same manner as in Example 14 except that trimethyl phosphate was used instead of the fluorine-containing phosphate. The result is shown in TABLE 3.

(Comparative Example 19)

A secondary battery was produced and evaluated in the same manner as in Example 14 except that triethyl phosphate was used instead of the fluorine-containing phosphate. The result is shown in TABLE 3.

(Comparative Example 20)

A secondary battery was produced and evaluated in the same manner as in Example 14 except that solvent EC/DEC (30/70) was used instead of the nonaqueous electrolyte solvent of Example 14.

TABLE 3

| | phosphate added to nonaqueous electrolyte solvent | capacity retention ratio |
|---|---|---|
| Ex. 14 | tris(2,2,2-trifluoroethyl) phosphate | 65 % |
| Ex. 15 | tris(2,2,3,3-tetrafluoropropyl) phosphate | 59 % |
| Ex. 16 | tris(2,2,3,3,3-pentafluoropropyl) phosphate | 60 % |
| Comp. Ex. 18 | trimethyl phosphate | 16 % |
| Comp. Ex. 19 | trimethyl phosphate | 35 % |
| Comp. Ex. 20 | no phosphate added (EC/DEC = 30/70) | 12 % |

As shown in TABLE 3, by using the electrolyte liquid containing a variety of the fluorine-containing phosphates, the capacity retention ratio was improved. In particular, tris(2,2,2-trifluoroethyl) phosphate used in Example 14 has high effect.

Subsequently, the content of the fluorine-containing phosphate in the nonaqueous electrolyte solvent was studied.

(Examples 17 to 24 and Comparative Example 21)

Secondary batteries were produced and evaluated in the same manner as in Example 2 except that the following nonaqueous electrolyte solvent was used. As the nonaqueous electrolyte solvent, a solvent obtained by mixing the mixed solvent of EC/DMC = 30/70 (solvent EC/DMC) and PTTFE at a volume ratio of (100-x):x was used. The values x and the results are shown in TABLE 4. Note that, the condition of Comparative Example 21 is the same as that of Comparative Example 6.

TABLE 4

| | x | EC/DMC/PTTFE | capacity retention ratio |
|---|---|---|---|
| Ex. 17 | 10 | 27/63/10 | 66 % |
| Ex. 18 | 20 | 24/56/20 | 72 % |
| Ex. 19 | 30 | 21/49/30 | 77 % |
| Ex. 20 | 40 | 18/42/40 | 76 % |
| Ex. 21 | 50 | 15/35/50 | 76 % |
| Ex. 22 | 60 | 12/28/60 | 70 % |
| Ex. 23 | 70 | 9/21/70 | 67 % |
| Ex. 24 | 80 | 6/14/80 | 65 % |
| Comp. Ex. 21 | 0 | 30/70/0 | 52 % |

As mentioned above, the capacity retention ratio was high when the content of PTTFE was in a range of 10 vol% or more and 70 vol% or less, and the capacity retention ratio was higher when it was in a range of 20 vol% or more and 60 vol% or less.

Subsequently, the combinations of the fluorine-containing phosphate and a variety of the solvents were studied. The cases, in which ethylene carbonate (EC), diethyl carbonate (DEC), dimethyl carbonate (DMC), ethyl methyl carbonate (EMC), fluorinated ethyl methyl carbonate ($CF_3OCOOC_2H_5$, also referred to as fluorinated EMC), methyl propionate, ethyl acetate, 1-ethoxycarbonyloxy-2-methoxycarbonyloxyethane ($C_2H_5$-OCOO-$CH_2CH_2$-OCOO-$CH_3$) or 1,2-bis(methoxycarbonyloxy)ethane ($CH_3$-OCOO-$CH_2CH_2$-OCOO-$CH_3$) was mixed, were studied.

(Examples 25 to 32, and Comparative Examples 22 and 23)

Secondary battery were produced and evaluated in the same manner as in Example 1 except that $LiNi_{0.5}Mn_{1.35}Ti_{0.15}O_4$ was used as the positive electrode active substance and except that the nonaqueous electrolyte solvent described in TABLE 5 was used. The results are shown in TABLE 5.

TABLE 5

| | composition of nonaqueous electrolyte solvent (volume ratio) | capacity retention ratio |
|---|---|---|
| Ex. 25 | EC/DEC/PTTFE = 30/35/35 | 75 % |
| Ex. 26 | EC/EMC/PTTFE = 30/35/35 | 76 % |
| Ex. 27 | EC/DMC/PTTFE = 30/35/35 | 78 % |
| Ex. 28 | EC/DMC/methyl propionate/PTTFE = 30/25/10/35 | 79 % |
| Ex. 29 | EC/DMC/ethyl acetate/PTTFE = 50/25/5/30 | 79 % |
| Ex. 30 | EC/DMC/1-ethoxycarbonyloxy-2-methoxycarbonyloxyethane /PTTFE = 40/10/10/30 | 82 % |
| Ex. 31 | EC/DMC/1,2-bis(methoxycarbonyloxy)ethane /PTTFE = 30/10/25/35 | 83 % |
| Ex. 32 | EC/fluorinated EMC/PTTFE = 30/40/30 | 75 % |
| Comp. Ex. 22 | EC/DEC = 30/70 | 12 % |
| Comp. Ex. 23 | EC/DMC = 30/70 | 55 % |

In all the nonaqueous electrolyte solvents used in the Examples, the effect was observed. In particular, in the case where an alkylene biscarbonate was contained together with the fluorine-containing phosphate, a good capacity retention ratio was obtained.

Subsequently, a stacked laminate type battery was produced, and the cycle property and the generated gas amount after the cycle evaluation were evaluated.

(Example 2-1)

$LiNi_{0.5}Mn_{1.35}Ti_{0.15}O_4$ as the positive electrode active substance, a polyvinylidene fluoride (5 mass%) as the binder and carbon black as the electroconductive agent (5 mass%) were mixed to be a positive electrode mixture. The positive electrode mixture was dispersed in N-methyl-2-pyrrolidone to prepare a positive electrode slurry. This positive electrode slurry was uniformly applied to both sides of a collector made of aluminum with a thickness of 20 $\mu$m. The thickness of the applied film was adjusted so that the first charge capacity per unit area of the electrode at one side of the collector became 2.5 $mAh/cm^2$. After dried, it was compressed and molded with a roll press to produce a positive electrode.

A synthetic graphite was used as a negative electrode active substance. The synthetic graphite was dispersed in N-methylpyrrolidone in which a PVDF was dissolved, to prepare a negative electrode slurry. The mass ratio of the negative electrode active substance and the binder was set to be 90/10. This negative electrode slurry was uniformly applied on both side of a Cu collector with a thickness of 10 $\mu$m. The thickness of the applied film was adjusted so that the first charge capacity of the electrode at one side of the collector became 3.0 $mAh/cm^2$. After dried, it was compressed and molded with a roll press to produce a negative electrode.

The positive electrode which was cut to 28 mm $\times$ 28 mm and the negative electrode which was cut to 30 mm $\times$ 30 mm were oppositely disposed through a separator. As the separator, a fine-porous polypropylene film with a thickness of 25 $\mu$m was used. The size of the separator is set to be 34 mm $\times$ 34 mm. It was designed so that the collector part of 7 mm $\times$ 5 mm appeared to the outside of the separator from the electrode because both the positive electrode and the negative electrode can be electrically connected to the outside.

The electrolyte liquid was prepared by dissolving $LiPF_6$ in a concentration of 1 mol/l in the nonaqueous electrolyte solvent having a composition (EC/DMC/PTTFE = 30/35/35) of following TABLE 6.

These were stacked in the order of the negative electrode, the separator, the positive electrode, the separator

and negative electrode. 6 layers of the negative electrode, 5 layers of the positive electrode and 10 layers of separators were stacked. In the positive electrodes and the negative electrodes, the projection parts of the collectors electrically connected to each layer were welded with electrode tabs. This stacked product was disposes in a laminate package and was sealed by lamination to produce a lithium secondary battery. The positive electrode and the negative electrode were connected to tabs and were electrically connected to the outside of the laminate. The electrolyte liquid was injected to the battery of this stacked product and it was sealed with vacuum by lamination to produce a stacked laminate type battery.

At a temperature of 20°C, charge and discharge were carried out in the following charge conditions and discharge conditions.

Charge conditions: constant current and constant voltage system, charge final voltage of 4.8 V, charge current of 40 mA, total charge time of 2.5 hours

Discharge condition: constant current discharge, discharge final voltage of 3.0 V, discharge current of 180 mA

The discharge capacity of the produced battery was about 180 mAh.

At this time, the volume of the cell was evaluated. The volume of the cell was measured by the Archimedes method. Specifically, the volume of the cell was calculated by the difference of the cell masses which were measured in air and in water.

Then, the charge and discharge cycle tests of these batteries were carried out. The charge and discharge cycle test was carried out at a temperature of 45°C in the following conditions.

Charge conditions: constant current and constant voltage system, charge final voltage of 4.8 V, charge current of 180 mA, total charge time of 2.5 hours

Discharge condition: constant current discharge, discharge final voltage of 3.0 V, discharge current of 180 mA

The capacity retention ratio (%) is the percentage of the discharge capacity (mAh) after 100 cycles with respect to the discharge capacity (mAh) at the $1^{st}$ cycle.

After 100 cycles at 45°C, the volume of the cell was evaluated again. The volume of the cell was measured by the Archimedes method like before cycle. The increasing rate of the cell volume was calculated from the change of the volume after 100 cycles at 45°C with respect to the volume before cycle.

(Examples 2-2 to 2-4)

Secondary batteries were produced and evaluated in the same manner as in Example 2-1 except that the nonaqueous electrolyte solvent having a composition of following TABLE 6 was used.

In Examples 2-1 to 2-4, as the nonaqueous electrolyte solvent, the concentration of EC (volume ratio) was fixed and the concentrations of DMC and PTTFE were changed.

The results of the capacity retention ratio and the cell volume change after 100 cycles at 45°C are shown in TABLE 6.

TABLE 6

| | composition of nonaqueous electrolyte solvent (volume ratio) | capacity retention ratio | cell volume change (generated gas amount) |
|---|---|---|---|
| Ex. 2-1 | EC/DMC/PTTFE = 30/35/35 | 78% | 50 % |
| Ex. 2-2 | EC/DMC/PTTFE = 30/20/50 | 77% | 18 % |
| Ex. 2-3 | EC/DMC/PTTFE = 30/10/60 | 75% | 12 % |
| Ex. 2-4 | EC/PTTFE = 30/70 | 74% | 2 % |

As shown in TABLE 6, when the composition of DMC and PTTFE was changed, the capacity retention ratio was slightly decreased in the case of using much PTTFE. However, all the battery in the Examples had high capacity retention ratio. On the other hand, it was confirm that the cell volumetric change was largely decreased by replacing DMC with PTTFE. This cell volume change is due to the generation of the gas in the cell. Since the gas generated in the cell resulted may result in the swollenness or the like, the amount of the generated gas was preferably small. In the case where the positive electrode operates at a high potential, the electrolyte liquid may be decomposed at a high temperature such as 45°C and the gas may be generated. It is thought that the amount of the generated gas can have been drastically decreased by replacing DMC with PTTFE having high oxidation resistance. Note that, since many fluorinated solvents have low compatibility with the non-fluorinated solvent such as EC, the solvent may be isolated by the mixing. However, the fluorinated phosphate had high compatibility with the non-fluorinated solvent such as EC, and the solvent was not isolated. Since the electrolyte liquid is preferably a uniform mixed solvent, the fluorinated phosphate

is excellent from the viewpoint of uniformity. As mentioned above, it has been confirmed that the positive electrode substance operating at a high potential also has high capacity retention ratio and the generation of the gas in the cell was suppressed.

(Examples 3-1 to 3-5)

In Examples 3-1 to 3-5, the experiments were carried out with changing the volume ratio of EC and PTTFE in Example 2-4. In other words, secondary batteries was produced and evaluated in the same manner as in Example 2-4 except that the nonaqueous electrolyte solvent having a composition of following TABLE 7 was used. The results are shown in TABLE 7.

(Examples 3-6 to 3-8)

In Examples 3-6 to 3-8, the experiments were carried out with changing a part of EC as the cyclic-type carbonate in Example 2-4 to PC, BC or 4-fluoro-1,3-dioxolane-2-one (FEC). In other words, secondary batteries were produced and evaluated in the same manner as in Example 2-4 except that the nonaqueous electrolyte solvent having a composition of following TABLE 7 was used. The results are shown in TABLE 7.

TABLE 7

| | composition of nonaqueous electrolyte solvent (volume ratio) | capacity retention ratio | cell volume change (generated gas amount) |
|---|---|---|---|
| Ex. 2-4 | EC/PTTFE = 30/70 | 74% | 2.0 % |
| Ex. 3-1 | EC/PTTFE = 20/80 | 74% | 1.5 % |
| Ex. 3-2 | EC/PTTFE = 10/90 | 71 % | 1.2 % |
| Ex. 3-3 | EC/PTTFE = 5/95 | 70% | 1.0 % |
| Ex. 3-4 | EC/PTTFE = 50/50 | 74% | 4.0 % |
| Ex. 3-5 | EC/PTTFE = 70/30 | 68% | 7.0 % |
| Ex. 3-6 | EC/PC/PTTFE = 20/5/75 | 74% | 2.5 % |
| Ex. 3-7 | EC/BC/PTTFE = 20/5/75 | 75% | 2.0 % |
| Ex. 3-8 | EC/FEC/PTTFE = 20/5/75 | 73% | 3.5 % |

The results of the good capacity retention ratio and the amount of the generated gas were obtained in the case where the content of the cyclic-type carbonate such as EC, PC, BC and FEC were 5 % or more.

As shown in Example 3-5, since the capacity retention ratio in the case where the content of the EC was 70 vol% was slightly decreased in comparison with the case of 50 vol%, it has been found that the content of the cyclic-type carbonate in the nonaqueous electrolyte solvent is preferably 70 vol% or less, and is more preferably 50 vol% or less. Also, from Example 3-5, it has been found that the content of the fluorinated phosphate in the nonaqueous electrolyte solvent is preferably 30 vol% or more.

As shown in Example 3-3, also in the case where the fluorinated phosphate is 95 vol%, the results of the capacity retention ratio and the amount of the generated gas were good. From these results, it has been found that the composition range of the fluorinated phosphate is preferably 95 vol% or less.

From the above-mentioned results, the nonaqueous electrolyte solvent preferably contains a fluorinated phosphate and a cyclic-type carbonate, and the content of the fluorinated phosphate in the nonaqueous electrolyte solvent is preferably 30 vol% or more and 95 vol% or less, and the content of the cyclic-type carbonate in the nonaqueous electrolyte solvent is 5 vol% or more and 70 vol% or less.

Subsequently, mixed solvents of a cyclic-type carbonate, a fluorinated phosphate and a fluorinated linear-type carbonate were studied. As the fluorinated linear-type carbonate, 2,2,2-trifluoroethyl methyl carbonate (hereinafter, FC1), monofluoromethyl methyl carbonate (hereinafter, FC2), methyl-2,2,3,3-tetrafluoropropyl carbonate (hereinafter, FC3) and bis(2,2,2-trifluoroethyl) carbonate (hereinafter, FC4) were used. As the fluorinated phosphate, tris(2,2,2-trifluoroethyl) phosphate (PTTFE), tris(1H,1H-heptafluorobutyl) phosphate (FP1) and tris(1H,1H,5H-octafluoropentyl) phosphate (FP2) were used.

(Example 4-1)

A secondary battery was produced and evaluated in the same manner as in Example 2-4 except that the nonaqueous electrolyte solvent having a composition of following TABLE 8 was used. The results are shown in TABLE 8.

(Examples 4-2 to 4-12)

Secondary batteries were produced and evaluated in the same manner as in Example 2-4 except that the nonaqueous electrolyte solvent having a composition of following TABLE 8 was used. The results are shown in TABLE 8.

TABLE 8

| | composition of nonaqueous electrolyte solvent (volume ratio) | capacity retention ratio | cell volume change (generated gas amount) |
|---|---|---|---|
| Ex. 2-4 | EC/PTTFE = 30/70 | 74% | 2 % |
| Ex. 4-1 | EC/DMC/PTTFE = 30/10/60 | 78 % | 12 % |
| Ex. 4-2 | EC/FC1/PTTFE = 30/10/60 | 75% | 3 % |
| Ex. 4-3 | EC/FC1/PTTFE = 30/20/50 | 78 % | 3 % |
| Ex. 4-4 | EC/FC1/PTTFE = 30/30/40 | 78% | 4 % |
| Ex. 4-5 | EC/FC1/PTTFE = 20/50/20 | 76% | 4 % |
| Ex. 4-6 | EC/FC1/PTTFE = 20/60/10 | 75% | 6 % |
| Ex. 4-7 | EC/FC1/PTTFE = 30/5/65 | 75% | 2 % |
| Ex. 4-8 | EC/FC2/PTTFE = 30/20/50 | 79% | 4 % |
| Ex. 4-9 | EC/FC3/PTTFE = 30/20/50 | 79% | 4 % |
| Ex. 4-10 | EC/FC4/PTTFE = 30/20/50 | 79% | 3 % |
| Ex. 4-11 | EC/FC1/PTTFE/FP1 = 20/10/50/20 | 77% | 3 % |
| Ex. 4-12 | EC/FC1/PTTFE/FP2 = 20/10/50/20 | 76% | 5 % |

As indicated in Examples 4-1 to 4-12, the high capacity retention ratio was obtained in the secondary battery using the electrolyte liquid containing a mixed solvent with a cyclic-type carbonate, a linear-type carbonate and a fluorinated phosphate.

Also, in the case of containing a fluorinated linear-type carbonate as the linear-type carbonate, it has been found that the amount of the generated gas can keep small and the capacity retention ratio is improved (Examples 4-2 to 4-12). Also, an effect of improving the capacity retention ratio and an effect of decreasing the amount of the generated gas have been confirmed in the case where the content of the fluorinated linear-type carbonate in the nonaqueous electrolyte solvent was at least in a range of 5 vol% or more and 60 vol% or less.

Also, as the fluorinated linear-type carbonate, 2,2,2-trifluoroethyl methyl carbonate, monofluoromethyl methyl carbonate and the like are preferably used.

Also, in Examples 4-2 to 4-7, an effect of improving the capacity retention ratio and an effect of decreasing the

amount of the generated gas have been confirmed in the case where the content of the fluorinated phosphate in the nonaqueous electrolyte solvent was at least in a range of 10 vol% or more and 65 vol% or less.

Also, as shown in Examples 4-11 and 4-12, also in the case of using a nonaqueous electrolyte solvent containing tris(1H,1H-heptafluorobutyl) phosphate (FP1) or tris(1H,1H,5H-octafluoropentyl) phosphate (FP2) as the fluorinated phosphate, similar effects were obtained.

From these results, an effect of improving the capacity retention ratio and an effect of decreasing the amount of the generated gas have been confirmed when using a nonaqueous electrolyte solvent containing a cyclic-type carbonate, a fluorinated linear-type carbonate and a fluorinated phosphate.

Subsequently, mixed solvents of a cyclic-type carbonate, a fluorinated phosphate and a fluorinated linear-type ether compound was studied. As the fluorinated linear-type ether compound, 1,1,2,2-tetrafluoroethyl-2,2,3,3-tetrafluoropropyl ether (FET1), 1,1,1,2,3,3-hexafluoropropyl-2,2-difluoroethyl ether (FET2), 1H,1H,2'H-perfluorodipropyl ether (FET3) and 1H,1H,2'H,3H- decafluorodipropyl ether (FET4) were used. Also, ET1 of TABLE 9 represents dipropyl ether.

As the fluorinated phosphate, tris(2,2,2-trifluoroethyl) phosphate (PTTFE), tris(1H,1H-heptafluorobutyl) phosphate (FP1) and tris(1H,1H,5H-octafluoropentyl) phosphate (FP2) were used.

(Examples 5-1 to 5-10)

Secondary batteries were produced and evaluated in the same manner as in Example 2-4 except that the nonaqueous electrolyte solvent having a composition of following TABLE 9 was used. The results are shown in TABLE 9.

(Example 5-11)

A secondary battery was produced and evaluated in the same manner as in Example 2-4 except that the nonaqueous electrolyte solvent having a composition of following TABLE 9 was used. The results are shown in TABLE 9.

(Examples 5-12 to 5-13)

Secondary batteries were produced and evaluated in the same manner as in Example 2-4 except that the nonaqueous electrolyte solvent having a composition of following TABLE 9 was used. The results are shown in TABLE 9.

TABLE 9

| | composition of nonaqueous electrolyte solvent (volume ratio) | capacity retention ratio | cell volume change (generated gas amount) |
|---|---|---|---|
| Ex. 2-4 | EC/PTTFE = 30/70 | 74% | 2 % |
| Ex. 5-1 | EC/FET1/PTTFE = 30/10/60 | 79% | 3 % |
| Ex. 5-2 | EC/FET1/PTTFE = 30/20/50 | 83% | 3 % |
| Ex. 5-3 | EC/FET1/PTTFE = 30/30/40 | 82% | 2 % |
| Ex. 5-4 | EC/FET1/PTTFE = 30/40/30 | 81% | 2 % |
| Ex. 5-5 | EC/FET1/PTTFE = 20/50/30 | 81% | 3 % |
| Ex. 5-6 | EC/FET1/PTTFE = 10/60/30 | 82% | 2 % |
| Ex. 5-7 | EC/FET2/PTTFE = 30/20/50 | 80% | 3 % |
| Ex. 5-8 | EC/FET3/PTTFE = 30/20/50 | 79% | 2 % |
| Ex. 5-9 | EC/FET4/PTTFE = 30/20/50 | 78% | 2 % |

(continued)

| | composition of nonaqueous electrolyte solvent (volume ratio) | capacity retention ratio | cell volume change (generated gas amount) |
|---|---|---|---|
| Ex. 5-10 | EC/FET4/PTTFE = 30/60/10 | 76% | 3 % |
| Ex. 5-11 | EC/ET1/PTTFE = 30/10/60 | 67% | 35 % |
| Ex. 5-12 | EC/FET1/PTTFE/FP1 = 20/10/50/20 | 77% | 3 % |
| Ex. 5-13 | EC/FET3/PTTFE/FP2 = 20/10/50/20 | 76% | 5 % |

In the nonaqueous electrolyte solvent consisting of a mixed solvent of a cyclic-type carbonate, a linear-type ether compound and a fluorinated phosphate, in the case of using a fluorinated linear-type ether as the linear-type ether compound, it has been found that the amount of the generated gas can keep small and the capacity retention ratio is improved.

The content of the fluorinated linear-type ether in the nonaqueous electrolyte solvent is preferably 5 vol% or more and 60 vol% or less. Also, as the fluorinated linear-type ether, 1,1,2,2-tetrafluoroethyl-2,2,3,3-tetrafluoropropyl ether, 1,1,1,2,3,3-hexafluoropropyl-2,2-difluoroethyl ether, 1H,1H,2'H-perfluorodipropyl ether, 1H,1H,2'H,3H-decafluorodipropyl ether and the like are preferable.

The effect was obtained in the case where the content of the fluorinated phosphate in the nonaqueous electrolyte solvent was at least in a range of 10 vol% or more and 60 vol% or less. Also, in the electrolyte liquid containing tris(1H,1H-heptafluorobutyl) phosphate (FP1) or tris(1H,1H,5H-octafluoropentyl) phosphate (FP2) as the fluorinated phosphate, similar effect was obtained.

From these results, an effect of improving the capacity retention ratio and an effect of decreasing the amount of the generated gas have been confirmed when using a nonaqueous electrolyte solvent containing a cyclic-type carbonate, a fluorinated linear-type ether and a fluorinated phosphate.

Subsequently, mixed solvents of a cyclic-type carbonate, a fluorinated phosphate and a fluorinated carboxylate was studied. As the fluorinated carboxylate compound, 2,2,3,3-tetrafluoromethyl propionate (FCX1), methyl heptafluoroisobutylate (FCX2) and 2,2,3,3-tetrafluoropropyl trifluoroacetate (FCX3) were used. Also, CX1 of TABLE 10 represents methyl propionate.

(Examples 6-1 to 6-3)

Secondary batteries were produced and evaluated in the same manner as in Example 2-4 except that the nonaqueous electrolyte solvent having a composition of following TABLE 10 was used. The results are shown in TABLE 10.

(Example 6-4)

A secondary battery was produced and evaluated in the same manner as in Example 2-4 except that the nonaqueous electrolyte solvent having a composition of following TABLE 10 was used. The results are shown in TABLE 10.

TABLE 10

| | composition of nonaqueous electrolyte solvent (volume ratio) | capacity retention ratio | cell volume change (generated gas amount) |
|---|---|---|---|
| Ex. 2-4 | EC/PTTFE = 30/70 | 74 % | 2 % |
| Ex. 6-1 | EC/PTTFE/FCX1 = 30/50/20 | 78 % | 5 % |
| Ex. 6-2 | EC/PTTFE/FCX2 = 30/50/20 | 76 % | 5 % |

(continued)

| | composition of nonaqueous electrolyte solvent (volume ratio) | capacity retention ratio | cell volume change (generated gas amount) |
|---|---|---|---|
| Ex. 6-3 | EC/PTTFE/FCX3 = 30/50/20 | 75 % | 4 % |
| Ex. 6-4 | EC/PTTFE/CX1 = 30/60/10 | 78 % | 17 % |

From these results, an effect of improving the capacity retention ratio and an effect of decreasing the amount of the generated gas have been confirmed when using a nonaqueous electrolyte solvent containing a cyclic-type carbonate, a fluorinated linear-type carboxylate and a fluorinated phosphate.
Subsequently, secondary batteries were produced using another material as the positive electrode active substance operating at 4.5 V or higher with respect to lithium, and they were evaluated.

(Examples 7-1 to 7-8)

In the Examples shown below, the following material was selected as the positive electrode active substance.
Example 7-1 :

$LiCoPO_4$

Example 7-2 :

$LiCo_{0.8}Mn_{0.2}PO_4$

Example 7-3 :

$LiCo_{0.8}Ni_{0.2}PO_4$

Example 7-4 :

$Li(Li_{0.2}Ni_{0.2}Mn_{0.6})O_2$

Example 7-5 :

$Li(Li_{0.2}Ni_{0.2}CO_{0.1}Mn_{0.5})O_2$

Example 7-6 :

$Li(Li_{0.15}Ni_{0.15}Mn_{0.7})O_2$

Example 7-7 :

$Li(Li_{0.1}Ni_{0.45}Mn_{0.45})O_2$

Example 7-8 :

$LiNi_{1/3}Co_{1/3}Mn_{1/3}O_2$

Each active substance has a voltage region at which Li is stably inserted and released therein. Thus, the charge voltage was set by every Example to be a value at which Li is stably inserted and released and by which a high capacity can be obtained.
In Examples 7-1 to7-3 ($LiCoPO_4$, $LiCo_{0.8}Mn_{0.2}PO_4$, $LiCo_{0.8}Ni_{0.2}PO_4$), the charge voltage was set to be 5.0 V.

In Examples 7-4 to 7-7 ($Li(Li_{0.2}Ni_{0.2}Mn_{0.6})O_2$, $Li(Li_{0.2}Ni_{0.2}Co_{0.1}Mn_{0.5})O_2$, $Li(Li_{0.15}Ni_{0.15}Mn_{0.7})O_2$, $Li(Li_{0.1}Ni_{0.45}Mn_{0.45})O_2$), the charge voltage was set to be 4.6 V. In Example 7-8 ($LiNi_{1/3}Co_{1/3}Mn_{1/3}O_2$), it was set to be 4.5 V.

A positive electrode was produced in the same manner as in Example 2-1 except that the film thickness of the electrode was adjusted as explained in the following.

At the time of producing the electrode, the thickness of the applied film was adjusted so that the first charge capacity per unit area of the one side of the positive electrode became 2.5 mAh/cm$^2$. Since the graphite negative electrode operates at approximately 0.1 V with respect to Li, the capacity in the potential obtained by adding 0.1 V to the upper voltage of the battery of each material was evaluated, and the film thickness of the electrode was adjusted based on the value.

Specifically, in Examples 7-1 to 7-3, the thickness of the applied film was adjusted so that the first charge capacity per unit area became 2.5 mAh/cm$^2$ based on the charge capacity when it was charged at 5.1 V with respect to Li. In Examples 7-4 to 7-7, the thickness of the applied film was adjusted so that the first charge capacity per unit area became 2.5 mAh/cm$^2$ based on the charge capacity when it was charged at 4.7 V with respect to Li. In Example 7-8, the thickness of the applied film was adjusted so that the first charge capacity per unit area became 2.5 mAh/cm$^2$ based on the charge capacity when it was charged at 4.6 V with respect to Li.

Secondary batteries were produced in the same manner as in Example 5-2 except that the above-mentioned positive electrode was used. Also, the secondary batteries were estimated in the same manner as in Example 5-2 except that the range of charge and discharge was set as shown in TABLE 11. The results are shown in TABLE 11.

(Comparative Examples 7-1 to 7-8)

Secondary batteries were produced and evaluated in the same manner as in Examples 7-1 to 7-8, respectively, except that mixed solvent (EC/DEC = 30/70) was used as the nonaqueous electrolyte solvent.

TABLE 11

| | positive electrode | nonaqueous electrolyte solvent | negative electrode | range of charge/ discharge | capacity retention ratio |
|---|---|---|---|---|---|
| Ex. 7-1 | $LiCoPO_4$ | EC/PTTFE/FET1 = 30/50/20 | graphite | 5.0 to 3 V | 68 % |
| Comp. Ex. 7-1 | $LiCoPO_4$ | EC/DEC = 30/70 | graphite | 5.0 to 3 V | 13 % |
| Ex. 7-2 | $LiCo_{0.8}Mn_{0.2}PO_4$ | EC/PTTFE/FET1 = 30/50/20 | graphite | 5.0 to 3 V | 66 % |
| Comp. Ex. 7-2 | $LiCo_{0.8}Mn_{0.2}PO_4$ | EC/DEC = 30/70 | graphite | 5.0 to 3 V | 11 % |
| Ex. 7-3 | $LiCo_{0.8}Ni_{0.2}PO_4$ | EC/PTTFE/FET1 = 30/50/20 | graphite | 5.0 to 3 V | 65 % |
| Comp. Ex. 7-3 | $LiCo_{0.8}Ni_{0.2}PO_4$ | EC/DEC = 30/70 | graphite | 5.0 to 3 V | 9 % |
| Ex. 7-4 | $Li(Li_{0.2}Ni_{0.2}Mn_{0.6})O_2$ | EC/PTTFE/FET1 = 30/50/20 | graphite | 4.6 to 2.5 V | 48 % |
| Comp. Ex. 7-4 | $Li(Li_{0.2}Ni_{0.2}Mn_{0.6})O_2$ | EC/DEC = 30/70 | graphite | 4.6 to 2.5 V | 5 % |
| Ex. 7-5 | $Li(Li_{0.2}Ni_{0.2}Co_{0.1}Mn_{0.5})O_2$ | EC/PTTFE/FET1 = 30/50/20 | graphite | 4.6 to 2.5 V | 58 % |
| Comp. Ex. 7-5 | $Li(Li_{0.2}Ni_{0.2}Co_{0.1}Mn_{0.5})O_2$ | EC/DEC = 30/70 | graphite | 4.6 to 2.5 V | 4 % |
| Ex. 7-6 | $Li(Li_{0.15}Ni_{0.15}Mn_{0.7})O_2$ | EC/PTTFE/FET1 = 30/50/20 | graphite | 4.6 to 2.5 V | 52 % |

(continued)

| | positive electrode | nonaqueous electrolyte solvent | negative electrode | range of charge/ discharge | capacity retention ratio |
|---|---|---|---|---|---|
| Comp. Ex. 7-6 | $Li(Li_{0.15}Ni_{0.15}Mn_{0.7})O_2$ | EC/DEC = 30/70 | graphite | 4.6 to 2.5 V | 4 % |
| Ex. 7-7 | $Li(Li_{0.1}Ni_{0.45}Mn_{0.45})O_2$ | EC/PTTFE/FET1 = 30/50/20 | graphite | 4.6 to 3 V | 62 % |
| Comp. Ex. 7-7 | $Li(Li_{0.1}Ni_{0.45}Mn_{0.45})O_2$ | EC/DEC = 30/70 | graphite | 4.6 to 3 V | 15 % |
| Ex. 7-8 | $LiNi_{1/3}Co_{1/3}Mn_{1/3}O_2$ | EC/PTTFE/FET1 = 30/50/20 | graphite | 4.5 to 2.5 V | 68 % |
| Comp. Ex. 7-8 | $LiNi_{1/3}Co_{1/3}Mn_{1/3}O_2$ | EC/DEC = 30/70 | graphite | 4.5 to 2.5 V | 12 % |

In Examples 7-1 to 7-8, even if any positive electrode active substance was used, a large effect of improving the cycle property was obtained by using the electrolyte liquid containing a fluorinated phosphate.

It is thought that the effect by the electrolyte liquid is a characteristic obtained commonly in a positive electrode material operating at a high potential. As the positive electrode material operating at a high voltage, lithium metal complex oxides are preferably used. Examples of the lithium metal complex oxide include, for example, $LiMPO_4$ (M is at least one of Co and Ni), $Li(M_{1-z}Mn_z)O_2$ ($0.7 \geq z \geq 0.33$, M is at least one of Li, Co and Ni) and $Li(Li_xM_{1-x-z}Mn_z)O_2$ ($0.3 > x \geq 0.1$, ($0.7 \geq z \geq 0.33$, M is at least one of Co and Ni).

Also, the secondary battery which has a positive electrode material operating at a high potential and an electrolyte liquid containing a fluorinated phosphate can provide the decrease of the amount of the generated gas with a high capacity retention ratio. In particular, in the secondary battery using the laminate package, much amount of the generated gas becomes a large problem regarding the appearance of the cell. However, this problem can be improved by using the electrolyte liquid containing a fluorinated phosphate.

As described above, the constitution of an exemplary embodiment of the invention can provide a lithium secondary battery having high operation voltage and high energy density with suppressing the decrease of reliability in a high temperature.

As follows, the Examples using a surface-treated graphite are mainly explained.

(Example 8-1)

$LiNi_{0.5}Mn_{1.5}O_4$ as the positive electrode active substance, a polyvinylidene fluoride (5 mass%) as the binder and carbon black as the electroconductive agent (5 mass%) were mixed to be a positive electrode mixture. The positive electrode mixture was dispersed in N-methyl-2-pyrrolidone to prepare a positive electrode slurry. This positive electrode slurry was uniformly applied to one side of a collector made of aluminum with a thickness of 20 $\mu$m. The thickness of the applied film was adjusted so that the first charge capacity per unit area became 2.5 mAh/$cm^2$. After dried, it was compressed and molded with a roll press to produce a positive electrode.

Surface-treated graphite consisting of graphite whose surface was coated with a low crystalline carbon material was dispersed in N-methylpyrrolidone in which a PVDF was dissolved, to prepare a negative electrode slurry. The mass ratio of the negative electrode active substance and the binder was set to be 90/10. This negative electrode slurry was uniformly applied on a Cu collector with a thickness of 10 $\mu$m. The thickness of the applied film was adjusted so that the first charge capacity became 3.0 mAh/$cm^2$. After dried, it was compressed and molded with a roll press to produce a negative electrode.

The positive electrode and the negative electrode which were cut to 3 cm x 3 cm were oppositely disposed through a separator. As the separator, a fine-porous polypropylene film with a thickness of 25 $\mu$m was used.

As the nonaqueous electrolyte solvent, a mixed solvent, which was obtained by mixing ethylene carbonate (EC), diethyl carbonate (DEC) and tris(2,2,2-trifluoroethyl) phosphate at a volume ratio of 24/56/20, was used. $LiPF_6$ was dissolved in this nonaqueous electrolyte solvent in a concentration of 1 mol/l to prepare an electrolyte liquid. Hereinafter, the solvent, which was obtained by mixing EC, DEC and tris(2,2,2-trifluoroethyl) phosphate at a mass ratio of 24/56/20 is also abbreviated to solvent EC/DEC/PTTFE.

The above-mentioned positive electrode, the negative electrode, the separator and the electrolyte liquid were

disposed in a laminate package and were sealed by lamination to produce a lithium secondary battery. The positive electrode and the negative electrode were connected to tabs and were electrically connected to the outside of the laminate.

At a temperature of 20°C, charge and discharge were carried out in the following charge conditions and discharge conditions.

Charge conditions: constant current and constant voltage system, charge final voltage of 4.8 V, charge current of 22.5 mA, total charge time of 2.5 hours

Discharge condition: constant current discharge, discharge final voltage of 3.0 V, discharge current of 20 mA

The discharge capacity of the produced battery was about 20 mAh.

Then, the charge and discharge cycle tests of these batteries were carried out. The charge and discharge cycle test was carried out at a temperature of 45°C in the following conditions.

Charge conditions: constant current and constant voltage system, charge final voltage of 4.8 V, charge current of 20 mA, total charge time of 2.5 hours

Discharge condition: constant current discharge, discharge final voltage of 3.0 V, discharge current of 20 mA

The capacity retention ratio (%) is the percentage of the discharge capacity (mAh) after 100 cycles with respect to the discharge capacity (mAh) at the 1st cycle. $LiNi_{0.5}Mn_{1.5}O_4$ was used as the positive electrode active substance as the Example.

(Example 8-2)

A solvent was prepared by mixing ethylene carbonate (EC), dimethyl carbonate (DMC) and tris(2,2,2-trifluoroethyl) phosphate at a volume ratio of 24/56/20. Hereinafter, this solvent is also abbreviated to solvent EC/DMC/PTTFE.

And, a secondary battery was produced and evaluated in the same manner as in Example 8-1 except that solvent EC/DMC/PTTFE was used as the nonaqueous electrolyte solvent. The result is shown in TABLE 12.

(Example 8-3)

A secondary battery was produced in the same manner as in Example 8-1 except that high crystalline graphite having no surface coating was used as the negative electrode active substance. And, it was evaluated in the same manner as in Example 8-1. The result is shown in TABLE 12.

(Example 8-4)

A secondary battery was produced in the same manner as in Example 8-2 except that high crystalline graphite having no surface coating was used as the negative electrode active substance. And, it was evaluated in the same manner as in Example 8-2. The result is shown in TABLE 12.

(Comparative Example 8-1)

A secondary battery was produced in the same manner as in Example 8-1 except that a solvent obtained by mixing ethylene carbonate (EC) and diethyl carbonate (DEC) at a volume ratio of 30/70 (hereinafter, also abbreviated to solvent EC/DEC) was used as the nonaqueous electrolyte solvent. And, it was evaluated in the same manner as in Example 8-1. The result is shown in TABLE 12.

(Comparative Example 8-2)

A secondary battery was produced in the same manner as in Example 8-1 [[1]] except that a solvent obtained by mixing ethylene carbonate (EC) and dimethyl carbonate (DMC) at a volume ratio of 30/70 (hereinafter, also abbreviated to solvent EC/DMC) was used as the nonaqueous electrolyte solvent. And, it was evaluated in the same manner as in Example 8-1. The result is shown in TABLE 12.

(Comparative Example 8-3)

A secondary battery was produced in the same manner as in Example 8-3 except that high crystalline graphite having no surface coating was used as the negative electrode active substance and that solvent EC/DEC was used as the nonaqueous electrolyte solvent. And, it was evaluated in the same manner as in Example 8-1. The result is shown in TABLE 12.

(Comparative Example 8-4)

A secondary battery was produced in the same manner as in Example 8-4 except that high crystalline graphite having no surface coating was used as the negative electrode active substance and that solvent EC/DMC was used as the nonaqueous electrolyte solvent. And, it was evaluated in the same manner as in Example 8-1. The result is shown in TABLE 12.

(Reference Example 8-1)

A secondary battery was produced in the same manner as in Example 8-1 except that $Li(Mn_{1.9}Li_{0.1})O_4$ was used as the positive electrode active substance. And, it was evaluated in the same manner as in Example 8-1 except that the charge final voltage was set to be 4.2 V. The result is shown in TABLE 12. The average discharge potential was evaluated in the same manner as in Example 8-1, but the voltage range of charge and discharge was set to be from 4.2 V to 3 V. Results are shown in TABLE 12.

(Reference Example 8-2)

A secondary battery was produced in the same manner as in Example 8-1 except that $Li(Mn_{1.9}Li_{0.1})O_4$ was used as the positive electrode active substance and except that high crystalline graphite having no surface coating was used as the negative electrode active substance. And, it was evaluated in the same manner as in Example 8-1 except that the charge final voltage was set to be 4.2 V. The result is shown in TABLE 12. The average discharge potential was evaluated in the same manner as in Example 8-1, but the voltage range of charge and discharge was set to be from 4.2 V to 3 V. Results are shown in TABLE 12.

(Reference Example 8-3)

A secondary battery was produced in the same manner as in Example 8-1 except that $Li(Mn_{1.9}Li_{0.1})O_4$ was used as the positive electrode active substance, except that high crystalline graphite having no surface coating was used as the negative electrode active substance, and except that solvent EC/DEC was used as the nonaqueous electrolyte solvent. And, it was evaluated in the same manner as in Example 8-1 except that the charge final voltage was set to be 4.2 V. The result is shown in TABLE 12. The average discharge potential was evaluated in the same manner as in Example 8-1, but the voltage range of charge and discharge was set to be from 4.2 V to 3 V. Results are shown in TABLE 12.

TABLE 12

| Capacity retention ratio after 100 cycles at 45°C | | | | | | |
|---|---|---|---|---|---|---|
| | positive electrode | average discharge potential | nonaqueous electrolyte solvent | negative electrode | range of charge/ discharge | capacity retention ratio |
| Ex. 8-1 | $LiNi_{0.5}Mn_{1.5}O_4$ | 4.65 | EC/DEC/PTTFE = 24/56/20 | surface-treated graphite | 4.8 V to 3 V | 73 % |
| Ex. 8-2 | $LiNi_{0.5}Mn_{1.5}O_4$ | 4.65 | EC/DMC/PTTFE = 24/56/20 | surface-treated graphite | 4.8 V to 3 V | 80 % |
| Ex. 8-3 | $LiNi_{0.5}Mn_{1.5}O_4$ | 4.65 | EC/DEC/PTTFE = 24/56/20 | graphite | 4.8 V to 3 V | 65 % |
| Ex. 8-4 | $LiNi_{0.5}Mn_{1.5}O_4$ | 4.65 | EC/DMC/PTTFE = 24/56/20 | graphite | 4.8 V to 3 V | 72 % |
| Comp. Ex. 8-1 | $LiNi_{0.5}Mn_{1.5}O_4$ | 4.65 | EC/DEC = 30/70 | surface-treated graphite | 4.8 V to 3 V | 15 % |
| Comp. Ex. 8-2 | $LiNi_{0.5}Mn_{1.5}O_4$ | 4.65 | EC/DMC = 30/70 | surface-treated graphite | 4.8 V to 3 V | 55 % |

(continued)

| Capacity retention ratio after 100 cycles at 45°C | | | | | | |
|---|---|---|---|---|---|---|
| | positive electrode | average discharge potential | nonaqueous electrolyte solvent | negative electrode | range of charge/ discharge | capacity retention ratio |
| Comp. Ex. 8-3 | $LiNi_{0.5}Mn_{1.5}O_4$ | 4.65 | EC/DEC = 30/70 | graphite | 4.8 V to 3 V | 12 % |
| Comp. Ex. 8-4 | $LiNi_{0.5}Mn_{1.5}O_4$ | 4.65 | EC/DMC = 30/70 | graphite | 4.8 V to 3 V | 52 % |
| Ref. Ex. 8-1 | $Li(Mn_{1.9}Li_{0.1})O_4$ | 4.0 | EC/DEC/PTTFE = 24/56/20 | surface-treated graphite | 4.2 V to 3 V | 80 % |
| Ref. Ex. 8-2 | $Li(Mn_{1.9}Li_{0.1})O_4$ | 4.0 | EC/DEC/PTTFE = 24/56/20 | graphite | 4.2 V to 3 V | 78 % |
| Ref. Ex. 8-3 | $Li(Mn_{1.9}Li_{0.1})O_4$ | 4.0 | EC/DEC = 30/70 | graphite | 4.2 V to 3 V | 85 % |

At first, by comparison regarding the cases of using a positive electrode active substance operating at a potential of 4.2 V or lower with respect to lithium (Reference Examples 8-1 to 8-3), the capacity retention ratio in the case where solvent EC/DEC was used and the negative electrode active substance was graphite (Reference Example 8-3) was most excellent. On the other hand, the capacity retention ratios in Reference Example 8-1 and Reference Example 8-2 where solvent EC/DEC/PTTFE was used were decreased than that of Reference Example 8-3. As the reason, it is assumed that the capacity was decreased due to a low ion conductivity of the electrolyte liquid because the dielectric constant of PTTFE is lower than that of carbonates such as EC and the viscosity is higher than that of DEC or the like, or due to a decreased electroconductivity of lithium because a coating caused by a side reaction of PTTFE on the surface is formed. Also, when solvent EC/DEC/PTTFE is used, the capacity retention ratio in the case where the negative electrode active substance was a surface-treated graphite (Reference Example 8-1) was slightly higher than that in the case of graphite (Reference Example 8-2).

Then, by comparison regarding the cases of using a positive electrode active substance operating a potential of 4.5 V or higher with respect to lithium and using solvent EC/DEC, both in the case where the negative electrode active substance was surface-treated graphite (Comparative Example 8-1) and in the case where it was graphite (Comparative Example 8-3), the capacity retention ratio was greatly decreased. This reason can be assumed why solvent EC/DEC is decomposed on the surface of the positive electrode due to the high charge potential.

Also, when solvent EC/DMC was used, both in the case where the negative electrode active substance was surface-treated graphite (Comparative Example 8-2) and in the case where it was graphite (Comparative Example 8-4), the capacity retention ratio was decreased. However, the decreasing range was smaller than that in the case using solvent EC/DEC. This reason can be assumed why the oxidation resistance of DMC was higher than that of DEC and the amount of the decomposition on the surface of the positive electrode of DMC was smaller than that of DEC.

Then, the comparison is made regarding Comparative Examples 8-1 to 8-4 which are the cases of using a positive electrode active substance operating a potential of 4.5 V or higher with respect to lithium and using solvent EC/DEC or solvent EC/DMC. Both in the case where the negative electrode active substance was surface-treated graphite (Comparative Examples 8-1 and 8-2) and in the case where it was graphite (Comparative Examples 8-3 and 8-4), the capacity retention ratio was greatly decreased. This reason can be assumed why solvent EC/DEC or solvent EC/DMC is decomposed on the surface of the positive electrode due to the high charge potential. Also, since the influence of this decomposition of the electrolyte liquid on the surface of the positive electrode to the capacity retention ratio is large, the difference of the negative electrode active substance does not greatly appear to the capacity retention ratio.

On the other hand, in Examples 8-1 to 8-4 where the electrolyte liquid mixed with PTTFE was used with the positive electrode active substance operating at potential 4.5V or higher with respect to lithium, the capacity retention ratio was greatly improved in comparison to Comparative Examples 8-1 to 8-4 where PTTFE was not mixed. This reason can be assumed why the decomposition amount of EC, DEC or DMC on the surface of the positive electrode was decreased by using PTTFE which has high oxidation resistance as the nonaqueous electrolyte solvent.

Further, the comparison is made regarding the difference of negative electrode active substance. The secondary batteries obtained by using surface-treated graphite as the negative electrode active substance (Examples 8-1 and 8-2) had a better capacity retention ratio than the secondary batteries obtained by using non-surface-treated graphite (Examples 8-3 and 8-4). These results show that the decomposition of the electrolyte liquid on the surface of the positive electrode can be suppressed and the side reaction of the electrolyte liquid on the surface of the negative electrode by using the fluorine-containing phosphate which has excellent oxidation resistance such as PTTFE together with surface-treated graphite. Thus, even if positive electrode active substance whose average discharge potential is 4.5V or higher was used, a good capacity retention ratio of the secondary battery can be realized by using a fluorine-containing phosphate as the solvent together with surface-treated graphite as the negative electrode active substance.

The combined effect by using a fluorine-containing phosphate together with surface-treated graphite as mentioned above is not an effect which is not observed in an operating potential range of a conventional the case of a 4 V class positive electrode material and is a new effect which is observed in a combination with a positive electrode active substance operating at 4.5 V or higher.

Then, a secondary battery was produced by using the positive electrode active substance shown in TABLE 13 as the positive electrode active substance having an average discharge potential of 4.5V or higher with respect to lithium, and it was evaluated. All the positive electrode materials shown in TABLE 13 are a material in which the positive electrode active substance operates at a potential of 4.5 V or higher with respect to lithium.

(Example 9-1)

A secondary battery was produced and evaluated in the same manner as in Example 8-1 except that $LiNi_{0.5}Mn_{1.35}Ti_{0.15}O_4$ was used as the positive electrode active substance was used.

(Example 9-2)

A secondary battery was produced and evaluated in the same manner as in Example 8-1 except that $LiNi_{0.5}Mn_{1.48}Al_{0.02}O_4$ was used as the positive electrode active substance was used. The result is shown in TABLE 13.

(Example 9-3)

A secondary battery was produced and evaluated in the same manner as in Example 8-1 except that $LiNi_{0.5}Mn_{1.48}Mg_{0.02}O_4$ was used as the positive electrode active substance was used. The result is shown in TABLE 13.

(Example 9-4)

A secondary battery was produced and evaluated in the same manner as in Example 8-1 except that $LiNi_{0.5}Mn_{1.49}B_{0.01}O_4$ was used as the positive electrode active substance was used. The result is shown in TABLE 13.

(Example 9-5)

A secondary battery was produced and evaluated in the same manner as in Example 8-1 except that $LiNi_{0.5}Mn_{1.45}Al_{0.05}O_{3.95}F_{0.05}$ was used as the positive electrode active substance was used. The result is shown in TABLE 13.

(Example 9-6)

A secondary battery was produced and evaluated in the same manner as in Example 8-1 except that $LiNi_{0.5}Mn_{1.48}Si_{0.02}O_{3.95}F_{0.05}$ was used as the positive electrode active substance was used. The result is shown in TABLE 13.

(Example 9-7)

A secondary battery was produced and evaluated in the same manner as in Example 8-1 except that $LiNi_{0.4}Co_{0.2}Mn_{1.25}Ti_{0.15}O_4$ was used as the positive electrode active substance was used. The result is shown in TABLE 13.

(Example 9-8)

A secondary battery was produced and evaluated in the same manner as in Example 8-1 except that $LiNi_{0.4}Fe_{0.2}Mn_{1.25}Ti_{0.15}O_4$ was used as the positive electrode active substance was used. The result is shown in TABLE 13.

(Example 10-1)

A secondary battery was produced and evaluated in the same manner as in Example 8-1 except that a non-surface-treated graphite (product name: MAG, made by Hitachi Chemical Co., Ltd.) was used as the negative electrode active substance was used. The result is shown in TABLE 13. Note that the condition of this Comparative Example is the same as those of Comparative Example 1.

(Example 10-2)

A secondary battery was produced and evaluated in the same manner as in Example 9-1 except that the non-surface-treated graphite was used as the negative electrode active substance was used. The result is shown in TABLE 13.

(Example 10-3)

A secondary battery was produced and evaluated in the same manner as in Example 9-2 except that the non-surface-treated graphite was used as the negative electrode active substance was used. The result is shown in TABLE 13.

(Example 10-4)

A secondary battery was produced and evaluated in the same manner as in Example 9-3 except that the non-surface-treated graphite was used as the negative electrode active substance was used. The result is shown in TABLE 13.

(Example 10-5)

A secondary battery was produced and evaluated in the same manner as in Example 9-4 except that the non-surface-treated graphite was used as the negative electrode active substance was used. The result is shown in TABLE 13.

(Example 10-6)

A secondary battery was produced and evaluated in the same manner as in Example 9-5 except that the non-surface-treated graphite was used as the negative electrode active substance was used. The result is shown in TABLE 13.

(Example 10-7)

A secondary battery was produced and evaluated in the same manner as in Example 9-6 except that the non-surface-treated graphite was used as the negative electrode active substance was used. The result is shown in TABLE 13.

(Example 10-8)

A secondary battery was produced and evaluated in the same manner as in Example 9-7 except that the non-surface-treated graphite was used as the negative electrode active substance was used. The result is shown in TABLE 13.

(Example 10-9)

A secondary battery was produced and evaluated in the same manner as in Example 9-8 except that the non-surface-treated graphite was used as the negative electrode active substance was used. The result is shown in TABLE 13.

TABLE 13

| | positive electrode | average discharge potential | negative electrode | range of charge/ discharge | capacity retention ratio |
|---|---|---|---|---|---|
| Ex. 8-1 | $LiNi_{0.5}Mn_{1.5}O_4$ | 4.65 | surface-treated graphite | 4.8 V to 3 V | 73 % |
| Ex. 9-1 | $LiNi_{0.5}Mn_{1.35}Ti_{0.15}O_4$ | 4.68 | surface-treated graphite | 4.8 V to 3 V | 80 % |

(continued)

| | positive electrode | average discharge potential | negative electrode | range of charge/ discharge | capacity retention ratio |
|---|---|---|---|---|---|
| Ex. 9-2 | $LiNi_{0.5}Mn_{1.48}Al_{0.02}O_4$ | 4.66 | surface-treated graphite | 4.8 V to 3 V | 75 % |
| Ex. 9-3 | $LiNi_{0.5}Mn_{1.48}Mg_{0.02}O_4$ | 4.65 | surface-treated graphite | 4.8 V to 3 V | 72 % |
| Ex. 9-4 | $LiNi_{0.5}Mn_{1.49}B_{0.01}O_4$ | 4.65 | surface-treated graphite | 4.8 V to 3 V | 73 % |
| Ex. 9-5 | $LiNi_{0.5}Mn_{1.48}Al_{0.05}O_{3.95}F_{0.05}$ | 4.67 | surface-treated graphite | 4.8 V to 3 V | 76 % |
| Ex. 9-6 | $LiNi_{0.5}Mn_{1.48}Si_{0.02}O_{3.95}F_{0.05}$ | 4.66 | surface-treated graphite | 4.8 V to 3 V | 75 % |
| Ex. 9-7 | $LiNi_{0.4}Co_{0.2}Mn_{1.25}Ti_{0.15}O_4$ | 4.67 | surface-treated graphite | 4.8 V to 3 V | 79 % |
| Ex. 9-8 | $LiNi_{0.4}Fe_{0.2}Mn_{1.25}Ti_{0.15}O_4$ | 4.61 | surface-treated graphite | 4.8 V to 3 V | 79 % |
| Ex. 10-1 | $LiNi_{0.5}Mn_{1.5}O_4$ | 4.65 | graphite | 4.8 V to 3 V | 65 % |
| Ex. 10-2 | $LiNi_{0.5}Mn_{1.35}Ti_{0.15}O_4$ | 4.68 | graphite | 4.8 V to 3 V | 75 % |
| Ex. 10-3 | $LiNi_{0.5}Mn_{1.48}Al_{0.02}O_4$ | 4.66 | graphite | 4.8 V to 3 V | 70 % |
| Ex. 10-4 | $LiNi_{0.5}Mn_{1.48}Mg_{0.02}O_4$ | 4.65 | graphite | 4.8 V to 3 V | 67 % |
| Ex. 10-5 | $LiNi_{0.5}Mn_{1.49}B_{0.01}O_4$ | 4.65 | graphite | 4.8 V to 3 V | 68 % |
| Ex. 10-6 | $LiNi_{0.5}Mn_{1.48}Al_{0.05}O_{3.95}F_{0.05}$ | 4.67 | graphite | 4.8 V to 3 V | 71 % |
| Ex. 10-7 | $LiNi_{0.5}Mn_{1.48}Si_{0.02}O_{3.95}F_{0.05}$ | 4.66 | graphite | 4.8 V to 3 V | 70 % |
| Ex. 10-8 | $LiNi_{0.4}Co_{0.2}Mn_{1.25}Ti_{0.15}O_4$ | 4.67 | graphite | 4.8 V to 3 V | 74 % |
| Ex. 10-9 | $LiNi_{0.4}Fe_{0.2}Mn_{1.25}Ti_{0.15}O_4$ | 4.61 | graphite | 4.8 V to 3 V | 74 % |

From the results of TABLE 13, in a variety of the positive electrode active substances operating at a potential of 4.5 V or higher with respect to lithium, it was found that the operating life of the battery can be improved more effectively by selecting a combination of an electrolyte liquid containing PTTFE and a negative electrode active substance consisting of a surface-coated graphite. From these results, it has been confirmed that the operating life was improved by using an electrolyte liquid containing a fluorine-containing phosphate when the positive electrode active substance operating at a potential of 4.5 V or higher is used.

In particular, in the case of a 5 V class positive electrode containing Ni such as $LiNi_{0.5}Mn_{1.5}O_4$, it is known that the high capacity is obtained. Thus, by using a 5V class positive electrode active substance containing Ni, it is expected that a battery having high capacity and long operating life is obtained.

Subsequently, the kind of the fluorine-containing phosphate was studied.

(Example 11-1)

A secondary battery was produced and evaluated in the same manner as in Example 8-1 except that the solvent obtained by mixing EC/DEC/fluorine-containing phosphate at a ratio of 30/40/30 was used as the nonaqueous electrolyte solvent and except that $LiNi_{0.5}Mn_{1.35}Ti_{0.15}O_4$ was used as the positive electrode active substance. Tris(2,2,2-trifluoroethyl) phosphate was used as the fluorine-containing phosphate. The result is shown in TABLE 14.

(Example 11-2)

A secondary battery was produced and evaluated in the same manner as in Example 11-1 except that tris(2,2,3,3-tetrafluoropropyl) phosphate was used as the fluorine-containing phosphate instead of tris(2,2,2-trifluoroethyl) phosphate. The result is shown in TABLE 14.

(Example 11-3)

A secondary battery was produced and evaluated in the same manner as in Example 11-1 except that tris(2,2,3,3,3-pentafluoropropyl) phosphate was used as the fluorine-containing phosphate instead of tris(2,2,2-trifluoroethyl) phosphate. The result is shown in TABLE 14.

(Comparative Example 11-1)

A secondary battery was produced and evaluated in the same manner as in Example 11-1 except that trimethyl phosphate was used instead of the fluorine-containing phosphate. The result is shown in TABLE 14.

(Comparative Example 11-2)

A secondary battery was produced and evaluated in the same manner as in Example 11-1 except that triethyl phosphate was used instead of the fluorine-containing phosphate. The result is shown in TABLE 14.

(Comparative Example 11-3)

A secondary battery was produced and evaluated in the same manner as in Example 11-1 except that solvent EC/DEC (30/70) was used instead of the nonaqueous electrolyte solvent of Example 11-1.

TABLE 14

| | phosphate added to nonaqueous electrolyte solvent | capacity retention ratio |
|---|---|---|
| Ex. 11-1 | tris(2,2,2-trifluoroethyl) phosphate | 70 % |
| Ex. 11-2 | tris(2,2,3,3-tetrafluoropropyl) phosphate | 64 % |
| Ex. 11-3 | tris(2,2,3,3,3-pentafluoropropyl) phosphate | 65 % |
| Comp. Ex. 11-1 | trimethyl phosphate | 21 % |
| Comp. Ex. 11-2 | trimethyl phosphate | 40 % |
| Comp. Ex. 11-3 | no phosphate added (EC/DEC = 30/70) | 11 % |

As shown in TABLE 14, the capacity retention ratio was improved by using the electrolyte liquid containing a variety of the fluorine-containing phosphates. In particular, the effect by tris(2,2,2-trifluoroethyl) phosphate used in Example 11-1 was high.

Subsequently, the content of the fluorine-containing phosphate in the nonaqueous electrolyte solvent was studied.

(Examples 12-1 to 12-8 and Comparative Example 12-1)

Secondary batteries were produced and evaluated in the same manner as in Example 8-1 except that the following nonaqueous electrolyte solvent was used. As the nonaqueous electrolyte solvent, a solvent obtained by mixing the mixed solvent of EC/DMC = 30/70 (solvent EC/DMC) and PTTFE at a mass ratio of (100-x):x was used. The values

x and the results are shown in TABLE 15. Note that, the condition of Comparative Example 12-1 is the same as that of Comparative Example 8-2.

TABLE 15

| | X | EC/DMC/PTTFE | capacity retention ratio |
|---|---|---|---|
| Ex. 12-1 | 10 | 27/63/10 | 71 % |
| Ex. 12-2 | 20 | 24/56/20 | 77 % |
| Ex. 12-3 | 30 | 21/49/30 | 82 % |
| Ex. 12-4 | 40 | 18/42/40 | 81 % |
| Ex. 12-5 | 50 | 15/35/50 | 81 % |
| Ex. 12-6 | 60 | 12/28/60 | 75 % |
| Ex. 12-7 | 70 | 9/21/70 | 70 % |
| Ex. 12-8 | 80 | 6/14/80 | 52 % |
| Comp. Ex. 12-1 | 0 | 30/70/0 | 55 % |

As mentioned above, the capacity retention ratio was high when the content of PTTFE was in a range of 10 vol% or more and 70 vol% or less, and the capacity retention ratio was higher when the content of PTTFE was in a range of 20 vol% or more and 60 vol% or less.

As described above, the constitution of an exemplary embodiment of the invention can provide a lithium secondary battery having high operation voltage and high energy density with suppressing the decrease of reliability in a high temperature.

Subsequently, various graphite materials were studied.

(Examples 13-1 to 13-6 and Comparative Examples 13-1 to 13-3)

9 graphite materials were obtained as the negative electrode active substance, and the surface crystallinity was evaluated by laser Raman scattering. The ratio ($I_D/I_G$) of the peak intensity ($I_D$) of D-band (around 1,360 $cm^{-1}$) with respect to the peak intensity ($I_G$) of G-band (around 1,600 $cm^{-1}$) obtained by laser Raman analysis was measured. The results are shown in TABLE 16.

Also, as for the obtained negative electrode active substance, the internal crystallinity was evaluated by X-ray diffraction. The interlayer spacing $d_{002}$ of 002 layer of the graphite was measured.

(Example 13-1)

A secondary battery was produced and evaluated in the same manner as in Example 8-1 except that the negative electrode active substance of TABLE 16 was used as the negative electrode active substance and except that EC/DMC/PTTFE = 50/40/10 (volume ratio) was used as the electrolyte liquid solvent. The result is shown in TABLE 16.

TABLE 16

| | negative electrode material | | interlayer spacing d002 of graphite [nm] | ID/IG ratio by laser Raman analysis | capacity retention ratio [%] |
|---|---|---|---|---|---|
| Ex. 13-1 | negative electrode material 1 | graphite | 0.3361 | 0.07 | 71 % |
| Ex. 13-2 | negative electrode material 2 | graphite | 0.3352 | 0.05 | 74 % |
| Ex. 13-3 | negative electrode material 3 | surface-treated graphite | 0.3360 | 0.28 | 85 % |

(continued)

| | negative electrode material | | interlayer spacing d002 of graphite [nm] | ID/IG ratio by laser Raman analysis | capacity retention ratio [%] |
|---|---|---|---|---|---|
| Ex. 13-4 | negative electrode material 4 | surface-treated graphite | 0.3361 | 0.14 | 81 % |
| Ex. 13-5 | negative electrode material 5 | surface-treated graphite | 0.3352 | 0.16 | 81 % |
| Ex. 13-6 | negative electrode material 6 | surface-treated graphite | 0.3347 | 0.22 | 82 % |
| Ex. 13-7 | negative electrode material 7 | surface-treated graphite | 0.3359 | 0.18 | 80 % |
| Ex. 13-8 | negative electrode material 8 | surface-treated graphite | 0.3358 | 0.26 | 84 % |
| Ex. 13-9 | negative electrode material 9 | amorphous carbon | unmeasurable due to amorphous | 0.4 | 76 % |

In the Examples in which graphite covered with a low crystalline carbon on the surface was used, the capacity decrease after charge and discharge cycle was effectively suppressed.

The present invention was explained with reference to embodiments and Examples, but the present invention is not limited to the above-mentioned embodiments and the Examples. In the constituents and the detail of the present invention, various changings which are understood by a person ordinarily skilled in the art can be made within the scope of the invention.

REFERENCE SIGNS LIST

1 positive electrode active substance layer
2 negative electrode active substance layer
3 positive electrode collector
4 negative electrode collector
5 separator
6 laminate package
7 laminate package
8 negative electrode tab
9 positive electrode tab

## Claims

1. A lithium secondary battery, which comprises a positive electrode comprising a positive electrode active substance and an electrolyte liquid comprising a nonaqueous electrolyte solvent;
wherein the positive electrode active substance operates at a potential of 4.5 V or higher with respect to lithium;
wherein the nonaqueous electrolyte solvent comprises a fluorine-containing phosphate represented by the following formula (1):

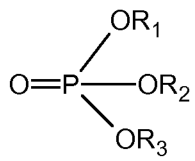 (1),

wherein, in formula (1), $R_1$, $R_2$ and $R_3$ are each independently a substituted or non-substituted alkyl group, and at least one of $R_1$, $R_2$ and $R_3$ is a fluorine-containing alkyl group; and
wherein the positive electrode active substance comprises a lithium manganese complex oxide represented by the following formula (4):

$$Li_a(M_xMn_{2-x-y}Y_y)(O_{4-w}Z_w) \qquad (4),$$

wherein, in the formula, it satisfies $0.4 \leq x \leq 1.2$, $0 \leq y$, $x+y < 2$, $0 \leq a \leq 1.2$, and $0 \leq w \leq 1$, M is at least one selected from the group consisting of among Co, Ni, Fe, Cr and Cu, Y is at least one selected from the group consisting of among Li, B, Na, Al, Mg, Ti, Si, K and Ca, and Z is at least one selected from the group consisting of among F and Cl.

**2.** A lithium secondary battery, which comprises a positive electrode comprising a positive electrode active substance and an electrolyte liquid comprising a nonaqueous electrolyte solvent;
wherein the positive electrode active substance operates at a potential of 4.5 V or higher with respect to lithium;
wherein the nonaqueous electrolyte solvent comprises a fluorine-containing phosphate represented by the following formula (1):

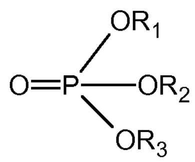 (1),

wherein, in formula (1), $R_1$, $R_2$ and $R_3$ are each independently a substituted or non-substituted alkyl group, and at least one of $R_1$, $R_2$ and $R_3$ is a fluorine-containing alkyl group; and
wherein the positive electrode active substance comprises a lithium metal complex oxide represented by the following formula (8), (9) or (10):

$$LiMPO_4 \qquad (8),$$

wherein, in formula (8), M is at least one of Co and Ni;

$$Li(M_{1-z}Mn_z)O_2 \qquad (9),$$

wherein, in formula (9), it satisfies $0.7 \geq z \geq 0.33$, and M is at least one of Li, Co and Ni; and

$$Li(Li_xM_{1-x-z}Mn_z)O_2 \qquad (10),$$

wherein, in formula (10), it satisfies $0.3 > x \geq 0.1$ and $0.7 \geq z \geq 0.33$, and M is at least one of Co and Ni.

**3.** The lithium secondary battery according to claim 1 or 2, wherein a content of the fluorine-containing phosphate is 10 vol% or more and 95 vol% or less in the nonaqueous electrolyte solvent.

**4.** The lithium secondary battery according to claim 1 or 2, wherein a content of the fluorine-containing phosphate is 20 vol% or more and 70 vol% or less in the nonaqueous electrolyte solvent.

**5.** The lithium secondary battery according to any one of claims 1 to 4, wherein at least one of $R_1$, $R_2$ and $R_3$ is a fluorine-containing alkyl group in which 50 % or more of hydrogen atoms of a corresponding non-substituted alkyl group are substituted by a fluorine atom.

**6.** The lithium secondary battery according to any one of claims 1 to 5, wherein the fluorine-containing phosphate is a compound represented by the following formula (2):

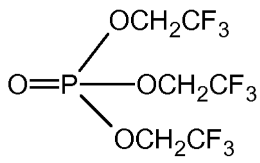

(2).

**7.** The lithium secondary battery according to any one of claims 1 to 6, wherein the nonaqueous electrolyte solvent comprises a cyclic-type carbonate.

**8.** The lithium secondary battery according to claim 7, wherein the cyclic-type carbonate is at least one selected from the group consisting of among ethylene carbonate, propylene carbonate, butylene carbonate and vinylene carbonate, and compounds having a structure in which a part or all of hydrogen atoms of these are substituted by a fluorine atom.

**9.** The lithium secondary battery according to any one of claims 1 to 8, wherein the nonaqueous electrolyte solvent comprises a linear-type carbonate.

**10.** The lithium secondary battery according to claim 9, wherein the linear-type carbonate is at least one selected from the group consisting of among dimethyl carbonate, diethyl carbonate, ethyl methyl carbonate and dipropyl carbonate, and compounds having a structure in which a part or all of hydrogen atoms of these are substituted by a fluorine atom.

**11.** The lithium secondary battery according to any one of claims 1 to 10, wherein the nonaqueous electrolyte solvent comprises a carboxylate.

**12.** The lithium secondary battery according to claim 11, wherein a content of the carboxylate is 0.1 vol% or more and 50 vol% or less in the nonaqueous electrolyte solvent.

**13.** The lithium secondary battery according to claim 11 or 12, wherein the carboxylate is at least one selected from the group consisting of among ethyl acetate and methyl propionate.

**14.** The lithium secondary battery according to any one of claims 1 to 13, wherein the nonaqueous electrolyte solvent comprises an alkylene biscarbonate represented by the following formula (3):

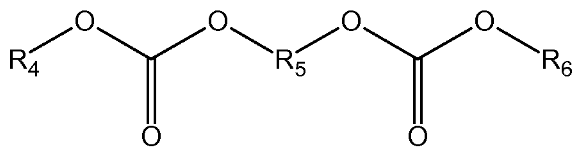

(3),

wherein $R_4$ and $R_6$ each independently represent a substituted or non-substituted alkyl group, and $R_5$ represents a substituted or non-substituted alkylene group.

**15.** The lithium secondary battery according to claim 14, wherein a content of the alkylene biscarbonate is 0.1 vol% or more and 70 vol% or less in the nonaqueous electrolyte solvent.

**16.** The lithium secondary battery according to claim 1, wherein the lithium manganese complex oxide comprises at least Ni as the M.

**17.** The lithium secondary battery according to claim 9, wherein the linear-type carbonate is a fluorinated linear-type carbonate represented by the following formula (5):

$$C_nH_{2n+1-l}F_l\text{-OCOO-}C_mH_{2m+1-k}F_k \quad (5),$$

wherein, in formula (5), n is 1, 2 or 3, m is 1, 2 or 3, l is any one integer from 0 to 2n+1, k is any one integer from 0

to 2m+1, and at least one of l and k is an integer of 1 or more.

**18.** The lithium secondary battery according to claim 17, wherein a content of the fluorinated linear-type carbonate is 0.1 vol% or more and 70 vol% or less in the nonaqueous electrolyte solvent.

**19.** The lithium secondary battery according to claim 11, wherein the carboxylate is a fluorinated carboxylate represented by the following formula (6):

$$C_nH_{2n+1-l}F_l\text{-COO-}C_mH_{2m+1-k}F_k \qquad (6),$$

wherein n is 1, 2, 3 or 4, m is 1, 2, 3 or 4, l is any one integer from 0 to 2n+1, k is any one integer from 0 to 2m+1, and at least one of l and k is an integer of 1 or more.

**20.** The lithium secondary battery according to any one of claims 1 to 8, wherein the nonaqueous electrolyte solvent comprises a linear-type ether.

**21.** The lithium secondary battery according to claim 20, wherein the linear-type carbonate is a fluorinated linear-type ether represented by the following formula (7):

$$C_nH_{2n+1-l}F_l\text{-O-}C_mH_{2m+1-k}F_k \qquad (7),$$

wherein, in formula (7), n is 1, 2, 3, 4, 5 or 6, m is 1, 2, 3 or 4, l is any one integer from 0 to 2n+1, k is any one integer from 0 to 2m+1, and at least one of l and k is an integer of 1 or more.

**22.** The lithium secondary battery according to claim 21, wherein a content of the fluorinated linear-type ether is 0.1 vol% or more and 70 vol% or less in the nonaqueous electrolyte solvent.

**23.** The lithium secondary battery according to any one of claims 1 to 22, comprising a package which encloses the positive electrode and the electrolyte liquid, wherein the package is constituted of an aluminum laminate.

**24.** The lithium secondary battery according to any one of claims 1 to 23, comprising a negative electrode comprising a negative electrode active substance, wherein the negative electrode active substance comprises graphite covered with a low crystalline carbon material.

**25.** The lithium secondary battery according to claim 24, wherein $I_D/I_G$ of the low crystalline carbon material is 0.08 or more and 0.5 or less.

**26.** The lithium secondary battery according to claim 24 or 25, wherein interlayer spacing $d_{002}$ of 002 layer of the graphite is 0.33 nm or more and 0.34 nm or less.

**Patentansprüche**

**1.** Lithiumsekundärbatterie, die eine positive Elektrode, die eine Aktivsubstanz für eine positive Elektrode umfasst, und eine Elektrolytflüssigkeit umfasst, die ein nichtwässriges Elektrolytlösungsmittel umfasst;
wobei die Aktivsubstanz für eine positive Elektrode bei einem Potenzial von 4,5 V oder höher hinsichtlich Lithium arbeitet;
wobei das nicht-wässrige Elektrolytlösungsmittel ein Fluor enthaltendes Phosphat umfasst, das durch die folgende Formel (1) dargestellt wird:

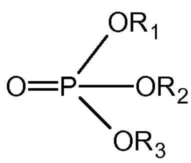
(1),

wobei in Formel (1) $R_1$, $R_2$ und $R_3$ jeweils unabhängig eine substituierte oder nicht substituierte Alkylgruppe ist und

mindestens einer von $R_1$, $R_2$ und $R_3$ eine Fluor enthaltende Alkylgruppe ist; und
wobei die Aktivsubstanz für eine positive Elektrode ein Lithiummanganmischoxid enthält, das durch die folgende Formel (4) dargestellt wird:

$$Li_a(M_xMn_{2-x-y}Y_y)(O_{4-w}Z_w) \quad (4),$$

wobei in der Formel gilt $0{,}4 \leq x \leq 1{,}2$, $0 \leq y$, $x+y < 2$, $0 \leq a \leq 1{,}2$ und $0 \leq w \leq 1$, M mindestens eines ausgewählt aus der Gruppe bestehend aus Co, Ni, Fe, Cr und Cu ist, Y mindestens eines ausgewählt aus der Gruppe bestehend aus Li, B, Na, Al, Mg, Ti, Si, K und Ca ist, und Z mindestens eines ausgewählt aus der Gruppe bestehend aus F und Cl ist.

2. Lithiumsekundärbatterie, die eine positive Elektrode, die eine Aktivsubstanz für eine positive Elektrode umfasst, und eine Elektrolytflüssigkeit umfasst, die ein nichtwässriges Elektrolytlösungsmittel umfasst;
wobei die Aktivsubstanz für eine positive Elektrode bei einem Potenzial von 4,5 V oder höher hinsichtlich Lithium arbeitet;
wobei das nicht-wässrige Elektrolytlösungsmittel ein Fluor enthaltendes Phosphat umfasst, das durch die folgende Formel (1) dargestellt wird:

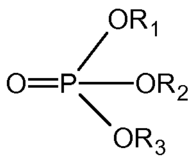
(1),

wobei in Formel (1) $R_1$, $R_2$ und $R_3$ jeweils unabhängig eine substituierte oder nicht substituierte Alkylgruppe ist und mindestens einer von $R_1$, $R_2$ und $R_3$ eine Fluor enthaltende Alkylgruppe ist; und
wobei die Aktivsubstanz für eine positive Elektrode ein Lithiummetallmischoxid enthält, das durch die folgende Formel (8), (9) oder (10) dargestellt wird:

$$LiMPO_4 \quad (8),$$

wobei in Formel (8) M mindestens eines von Co und Ni ist;

$$Li(M_{1-z}Mn_z)O_2 \quad (9),$$

wobei in Formel (9) $0{,}7 \geq z \geq 0{,}33$ gilt, und M mindestens eines von Li, Co und Ni ist; und

$$Li(Li_xM_{1-x-z}Mn_z)O_2 \quad (10),$$

wobei in Formel (10) $0{,}3 > x \geq 0{,}1$ und $0{,}7 \geq z \geq 0{,}33$ gilt und M mindestens eines von Co und Ni ist.

3. Lithiumsekundärbatterie gemäß Anspruch 1 oder 2, wobei ein Gehalt des Fluor enthaltenden Phosphats 10 Vol.-% oder mehr und 95 Vol.-% oder weniger in dem nicht-wässrigen Elektrolytlösungsmittel ist.

4. Lithiumsekundärbatterie gemäß Anspruch 1 oder 2, wobei ein Gehalt des Fluor enthaltenden Phosphats 20 Vol.-% oder mehr und 70 Vol.-% oder weniger in dem nicht-wässrigen Elektrolytlösungsmittel ist.

5. Lithiumsekundärbatterie gemäß einem der Ansprüche 1 bis 4, wobei mindestens einer von $R_1$, $R_2$ und $R_3$ eine Fluor enthaltende Alkylgruppe ist, bei der 50 % oder mehr von Wasserstoffatomen einer entsprechenden nicht substituierten Alkylgruppe durch ein Fluoratom substituiert sind.

6. Lithiumsekundärbatterie gemäß einem der Ansprüche 1 bis 5, wobei das Fluor enthaltende Phosphat eine Verbindung ist, die durch die folgende Formel (2) dargestellt wird:

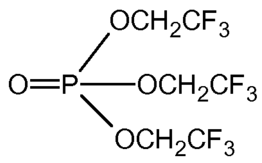

(2).

7. Lithiumsekundärbatterie gemäß einem der Ansprüche 1 bis 6, wobei das nicht-wässrige Elektrolytlösungsmittel ein Carbonat vom zyklischen Typ umfasst.

8. Lithiumsekundärbatterie gemäß Anspruch 7, wobei das Carbonat vom zyklischen Typ mindestens eines ausgewählt aus der Gruppe bestehend aus Ethylencarbonat, Propylencarbonat, Butylencarbonat und Vinylencarbonat ist und Verbindungen eine Struktur aufweisen, in der ein Teil der oder alle Wasserstoffatome von diesen durch ein Fluoratom substituiert sind.

9. Lithiumsekundärbatterie gemäß einem der Ansprüche 1 bis 8, wobei das nicht-wässrige Elektrolytlösungsmittel ein Carbonat vom linearen Typ umfasst.

10. Lithiumsekundärbatterie gemäß Anspruch 9, wobei das Carbonat vom linearen Typ mindestens eines ausgewählt aus der Gruppe bestehend aus Dimethylcarbonat, Diethylcarbonat, Ethylmethylcarbonat und Dipropylcarbonat ist und Verbindungen, die eine Struktur aufweisen, in der ein Teil der oder alle Wasserstoffatome von diesen durch ein Fluoratom substituiert sind.

11. Lithiumsekundärbatterie gemäß einem der Ansprüche 1 bis 10, wobei das nicht-wässrige Elektrolytlösungsmittel ein Carboxylat umfasst.

12. Lithiumsekundärbatterie gemäß Anspruch 11, wobei ein Gehalt des Carboxylats 0,1 Vol.-% oder mehr und 50 Vol.-% oder weniger in dem nicht-wässrigen Elektrolytlösungsmittel ist.

13. Lithiumsekundärbatterie gemäß Anspruch 11 oder 12, wobei das Carboxylat mindestens eines ausgewählt aus der Gruppe bestehend aus Ethylacetat und Methylpropionat ist.

14. Lithiumsekundärbatterie gemäß einem der Ansprüche 1 bis 13, wobei das nicht-wässrige Elektrolytlösungsmittel ein Alkylenbiscarbonat umfasst, das durch die folgende Formel (3) dargestellt wird:

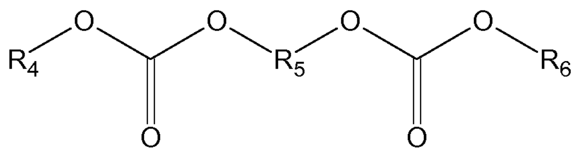

(3),

wobei $R_4$ und $R_6$ jeweils unabhängig eine substituierte oder nicht substituierte Alkylgruppe darstellt und $R_5$ eine substituierte oder nicht substituierte Alkylengruppe darstellt.

15. Lithiumsekundärbatterie gemäß Anspruch 14, wobei ein Gehalt des Alkylenbiscarbonats 0,1 Vol.-% oder mehr und 70 Vol.-% oder weniger in dem nicht-wässrigen Elektrolytlösungsmittel ist.

16. Lithiumsekundärbatterie gemäß Anspruch 1, wobei das Lithiummanganmischoxid mindestens Ni als das M umfasst.

17. Lithiumsekundärbatterie gemäß Anspruch 9, wobei das Carbonat vom linearen Typ ein fluoriertes Carbonat vom linearen Typ ist, das durch die folgende Formel (5) dargestellt wird:

$$C_nH_{2n+1-l}F_l\text{-OCOO-}C_mH_{2m+1-k}F_k \qquad (5),$$

wobei in der Formel (5) n 1, 2 oder 3 ist, m 1, 2 oder 3 ist, l eine ganze Zahl von 0 bis 2n+1 ist, k eine ganze Zahl von 0 bis 2m+1 ist und mindestens eines von l und k eine ganze Zahl von 1 oder mehr ist.

**18.** Lithiumsekundärbatterie gemäß Anspruch 17, bei ein Gehalt des fluorierten Carbonats vom linearen Typ 0,1 Vol.-% oder mehr und 70 Vol.-% oder weniger in dem nicht-wässrigen Elektrolytlösungsmittel ist.

**19.** Lithiumsekundärbatterie gemäß Anspruch 11, wobei das Carboxylat ein fluoriertes Carboxylat ist, das durch die folgende Formel (6) dargestellt wird:

$$C_nH_{2n+1-l}F_l\text{-COO-}C_mH_{2m+1-k}F_k \qquad (6),$$

wobei n 1, 2, 3 oder 4 ist, m 1, 2, 3 oder 4 ist, l eine ganze Zahl von 0 bis 2n+1 ist, k eine ganze Zahl von 0 bis 2m+1 ist und mindestens eines von l und k eine ganze Zahl von 1 oder mehr ist.

**20.** Lithiumsekundärbatterie gemäß einem der Ansprüche 1 bis 8, wobei das nicht-wässrige Elektrolytlösungsmittel einen Ether vom linearen Typ umfasst.

**21.** Lithiumsekundärbatterie gemäß Anspruch 20, wobei das Carbonat vom linearen Typ ein fluorierter Ether vom linearen Typ ist, der durch die folgende Formel (7) dargestellt wird:

$$C_nH_{2n+1-l}F_l\text{-O-}C_mH_{2m+1-k}F_k \qquad (7),$$

wobei in Formel 7 n 1, 2, 3, 4, 5 oder 6 ist, m 1, 2, 3 oder 4 ist, l eine ganze Zahl von 0 bis 2n+1 ist, k eine ganze Zahl von 0 bis 2m+1 ist und mindestens eines von l und k eine ganze Zahl von 1 oder mehr ist.

**22.** Lithiumsekundärbatterie gemäß Anspruch 21, wobei ein Gehalt des fluorierten Ethers vom linearen Typ 0,1 Vol.-% oder mehr und 70 Vol.-% oder weniger in dem nicht-wässrigen Elektrolytlösungsmittel ist.

**23.** Lithiumsekundärbatterie gemäß einem der Ansprüche 1 bis 22, die ein Gehäuse umfasst, das die positive Elektrode und die Elektrolytflüssigkeit einschließt, wobei das Gehäuse aus einem Aluminiumlaminat aufgebaut ist.

**24.** Lithiumsekundärbatterie gemäß einem der Ansprüche 1 bis 23, die eine negative Elektrode umfasst, die eine Aktivsubstanz für eine negative Elektrode umfasst, wobei die Aktivsubstanz für eine negative Elektrode Graphit umfasst, das mit einem niederkristallinen Kohlenstoffmaterial bedeckt ist.

**25.** Lithiumsekundärbatterie gemäß Anspruch 24, wobei $I_D/I_G$ des niederkristallinen Kohlenstoffmaterials 0,08 oder mehr und 0,5 oder weniger beträgt.

**26.** Lithiumsekundärbatterie gemäß Anspruch 24 oder 25, wobei der Zwischenschichtabstand $d_{002}$ der 002-Schicht des Graphits 0,33 nm oder mehr und 0,34 nm oder weniger beträgt.

## Revendications

**1.** Batterie secondaire au lithium, qui comprend une électrode positive comprenant une substance active d'électrode positive et un liquide électrolytique comprenant un solvant pour électrolyte non aqueux ;
dans laquelle la substance active d'électrode positive opère à un potentiel de 4,5 V ou plus par rapport au lithium ;
dans laquelle le solvant pour électrolyte non aqueux comprend un phosphate contenant du fluor représenté par la formule (1) suivante :

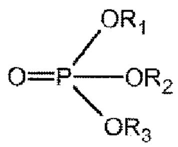

(1),

dans laquelle, dans la formule (1), $R_1$, $R_2$ et $R_3$ sont chacun indépendamment un groupe alkyle substitué ou non substitué, et au moins l'un parmi $R_1$, $R_2$ et $R_3$ est un groupe alkyle contenant du fluor ; et
dans laquelle la substance active d'électrode positive comprend un oxyde complexe de lithium et de manganèse représenté par la formule (4) suivante :

$$Li_a(M_xMn_{2-x-y}Y_y)(O_{4-w}Z_w) \quad (4),$$

dans laquelle, dans la formule, il est satisfait à $0,4 \leq x\ 0 \leq 1,2$, $0 \leq y$, $x+y < 2$, $0 \leq a \leq 1,2$ et $0 \leq w \leq 1$, M est au moins un élément choisi dans le groupe constitué par Co, Ni, Fe, Cr et Cu, Y est au moins un élément choisi dans le groupe constitué par Li, B, Na, Al, Mg, Ti, Si, K et Ca et Z est au moins un élément choisi dans le groupe constitué par F et Cl.

**2.** Batterie secondaire au lithium, qui comprend une électrode positive comprenant une substance active d'électrode positive et un liquide électrolytique comprenant un solvant pour électrolyte non aqueux ;
dans laquelle la substance active d'électrode positive opère à un potentiel de 4,5 V ou plus par rapport au lithium ;
dans laquelle le solvant pour électrolyte non aqueux comprend un phosphate contenant du fluor représenté par la formule (1) suivante :

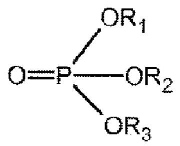
(1),

dans laquelle, dans la formule (1), $R_1$, $R_2$ et $R_3$ sont chacun indépendamment un groupe alkyle substitué ou non substitué, et au moins l'un parmi $R_1$, $R_2$ et $R_3$ est un groupe alkyle contenant du fluor ; et
dans laquelle la substance active d'électrode positive comprend un oxyde complexe de lithium métallique représenté par la formule (8), (9) ou (10) suivante :

$$LiMPO_4 \quad (8),$$

dans laquelle, dans la formule (8), M est au moins l'un parmi Co et Ni ;

$$Li(M_{1-z}Mn_z)O_2 \quad (9),$$

dans laquelle, dans la formule (9), il est satisfait à $(0.7 \geq z \geq 0,33$ et M est au moins l'un parmi Li, Co et Ni ; et

$$Li(Li_xM_{1-x-z}Mn_z)O_2 \quad (10),$$

dans laquelle, dans la formule (10), il est satisfait à $0,3 > x \geq 0,1$ et $(0.7 \geq (0.7 \geq 0,33$, et M est au moins l'un parmi Co et Ni.

**3.** Batterie secondaire au lithium selon la revendication 1 ou 2, dans laquelle une teneur en phosphate contenant du fluor est de 10 % en volume ou plus et 95 % en volume ou moins dans le solvant pour électrolyte non aqueux.

**4.** Batterie secondaire au lithium selon la revendication 1 ou 2, dans laquelle une teneur en phosphate contenant du fluor est de 20 % en volume ou plus et 70 % en volume ou moins dans le solvant pour électrolyte non aqueux.

**5.** Batterie secondaire au lithium selon l'une quelconque des revendications 1 à 4, dans laquelle au moins l'un parmi $R_1$, $R_2$ et $R_3$ est un groupe alkyle contenant du fluor dans lequel 50 % ou plus des atomes d'hydrogène d'un groupe alkyle non substitué correspondant sont substitués par un atome de fluor.

**6.** Batterie secondaire au lithium selon l'une quelconque des revendications 1 à 5, dans laquelle le phosphate contenant du fluor est un composé représenté par la formule (2) suivante :

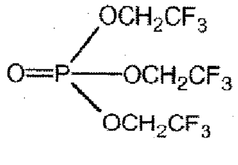
(2).

**7.** Batterie secondaire au lithium selon l'une quelconque des revendications 1 à 6, dans laquelle le solvant pour électrolyte non aqueux comprend un carbonate de type cyclique.

**8.** Batterie secondaire au lithium selon la revendication 7, dans laquelle le carbonate de type cyclique est au moins l'un choisi dans le groupe constitué par le carbonate d'éthylène, le carbonate de propylène, le carbonate de butylène et le carbonate de vinylène, et les composés ayant une structure dans laquelle une partie ou la totalité des atomes d'hydrogène de ceux-ci sont substitués par un atome de fluor.

**9.** Batterie secondaire au lithium selon l'une quelconque des revendications 1 à 8, dans laquelle le solvant pour électrolyte non aqueux comprend un carbonate de type linéaire.

**10.** Batterie secondaire au lithium selon la revendication 9, dans laquelle le carbonate de type linéaire est au moins un carbonate choisi dans le groupe constitué par le carbonate de diméthyle, le carbonate de diéthyle, le carbonate d'éthyle et de méthyle et le carbonate de dipropyle, et les composés ayant une structure dans laquelle une partie ou la totalité des atomes d'hydrogène de ceux-ci sont substitués par un atome de fluor.

**11.** Batterie secondaire au lithium selon l'une quelconque des revendications 1 à 10, dans laquelle le solvant pour électrolyte non aqueux comprend un carboxylate.

**12.** Batterie secondaire au lithium selon la revendication 11, dans laquelle une teneur en carboxylate est de 0,1 % en volume ou plus et 50 % en volume ou moins dans le solvant pour électrolyte non aqueux.

**13.** Batterie secondaire au lithium selon la revendication 11 ou 12, dans laquelle le carboxylate est au moins un composé choisi dans le groupe constitué par l'acétate d'éthyle et le propionate de méthyle.

**14.** Batterie secondaire au lithium selon l'une quelconque des revendications 1 à 13, dans laquelle le solvant pour électrolyte non aqueux comprend un bicarbonate d'alkylène représenté par la formule (3) suivante :

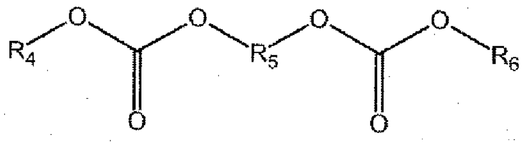

(3),

dans laquelle $R_4$ et $R_6$ chacun indépendamment représentent un groupe alkyle substitué ou non substitué, et $R_5$ représente un groupe alkylène substitué ou non substitué.

**15.** Batterie secondaire au lithium selon la revendication 14, dans laquelle une teneur en bicarbonate d'alkylène est de 0,1 % en volume ou plus et 70 % en volume ou moins dans le solvant pour électrolyte non aqueux.

**16.** Batterie secondaire au lithium selon la revendication 1, dans laquelle l'oxyde complexe de lithium et de manganèse comprend au moins Ni en tant que M.

**17.** Batterie secondaire au lithium selon la revendication 9, dans laquelle le carbonate de type linéaire est un carbonate de type linéaire fluoré représenté par la formule (5) suivante :

$$C_nH_{2n+1-l}F_l\text{-}OCOO\text{-}C_mH_{2m+1-k}F_k \qquad (5),$$

dans laquelle, dans la formule (5), n est 1, 2 ou 3, m est 1, 2 ou 3, l est n'importe quel entier de 0 à 2n+1, k est n'importe quel entier de 0 à 2m+1, et au moins l'un parmi l et k est un entier de 1 ou plus.

**18.** Batterie secondaire au lithium selon la revendication 17, dans laquelle une teneur en carbonate de type linéaire fluoré est de 0,1 % en volume ou plus et 70 % en volume ou moins dans le solvant pour électrolyte non aqueux.

**19.** Batterie secondaire au lithium selon la revendication 11, dans laquelle le carboxylate est un carboxylate fluoré représenté par la formule (6) suivante :

$$C_nH_{2n+1-l}F_l\text{-}COO\text{-}C_mH_{2m+1-k}F_k \qquad (6),$$

dans laquelle n est 1, 2, 3 ou 4, m est 1, 2, 3 ou 4, l est n'importe quel entier de 0 à 2n+1, k est n'importe quel entier de 0 à 2m+1, et au moins l'un parmi l et k est un entier de 1 ou plus.

**20.** Batterie secondaire au lithium selon l'une quelconque des revendications 1 à 8, dans laquelle le solvant pour électrolyte non aqueux comprend un éther de type linéaire.

**21.** Batterie secondaire au lithium selon la revendication 20, dans laquelle le carbonate de type linéaire est un éther de type linéaire fluoré représenté par la formule (7) suivante :

$$C_nH_{2n+1-l}F_l\text{-}O\text{-}C_mH_{2m+1-k}F_k \qquad (7),$$

dans laquelle, dans la formule (7), n est 1, 2, 3, 4, 5 ou 6, m est 1, 2, 3 ou 4, l est n'importe quel entier de 0 à 2n+1, k est n'importe quel entier de 0 à 2m+1, et au moins l'un parmi l et k est un entier de 1 ou plus.

**22.** Batterie secondaire au lithium selon la revendication 21, dans laquelle une teneur en éther de type linéaire fluoré est de 0,1 % en volume ou plus et 70 % en volume ou moins dans le solvant pour électrolyte non aqueux.

**23.** Batterie secondaire au lithium selon l'une quelconque des revendications 1 à 22, comprenant un contenant qui contient l'électrode positive et le liquide électrolytique, lequel contenant est constitué d'un stratifié d'aluminium.

**24.** Batterie secondaire au lithium selon l'une quelconque des revendications 1 à 23, comprenant une électrode négative comprenant une substance active d'électrode négative, laquelle substance active d'électrode négative comprend du graphite recouvert avec un matériau carboné faiblement cristallin.

**25.** Batterie secondaire au lithium selon la revendication 24, dans laquelle $I_D/I_G$ du matériau carboné faiblement cristallin est de 0,08 ou plus et 0,5 ou moins.

**26.** Batterie secondaire au lithium selon la revendication 24 ou 25, dans laquelle l'espacement intercouche $d_{002}$ de la couche 002 du graphite est de 0,33 nm ou plus et 0,34 nm ou moins.

FIG.1

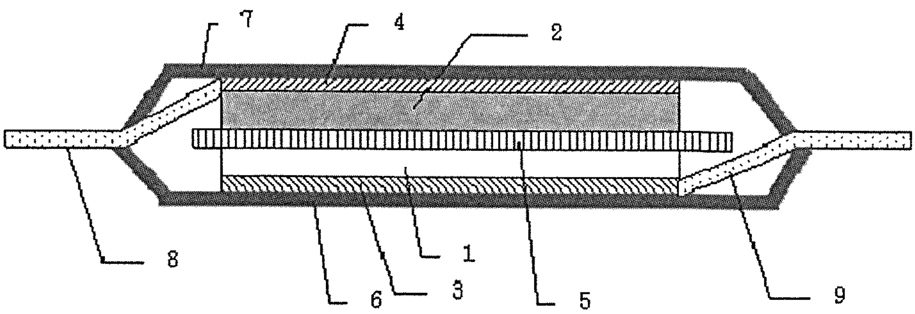

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3961597 B
- JP 3821495 B
- JP 4187965 B
- JP 2008021560 A
- JP 2009123707 A
- JP 2007059192 B
- US 6924061 B
- US 20020076619 A
- JP 2005078847 B
- JP 2004047404 A


### Non-patent literature cited in the description


- *J. Electrochem. Soc.,* 1997, vol. 144, 204